(19) Europäisches Patentamt
European Patent Office
Office européen des brevets

(11) **EP 4 734 636 A1**

(12) **EUROPEAN PATENT APPLICATION**
published in accordance with Art. 153(4) EPC

(43) Date of publication:
**29.04.2026   Bulletin 2026/18**

(21) Application number: **24850847.5**

(22) Date of filing: **29.07.2024**

(51) International Patent Classification (IPC):
**H04W 72/0446** (2023.01)

(52) Cooperative Patent Classification (CPC):
**H04W 24/02; H04W 72/0446; H04W 72/23**

(86) International application number:
**PCT/CN2024/108270**

(87) International publication number:
**WO 2025/031199 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023   CN 202311014175**

(71) Applicant: **Huawei Technologies Co., Ltd.
Shenzhen, Guangdong 518129 (CN)**

(72) Inventors:
• **LU, Shaozhong
  Shenzhen, Guangdong 518129 (CN)**
• **GUO, Zhiheng
  Shenzhen, Guangdong 518129 (CN)**
• **SONG, Xinghua
  Shenzhen, Guangdong 518129 (CN)**
• **HOU, Hailong
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR CONFIGURING MEASUREMENT RESOURCE**

(57)     A measurement resource configuration method and an apparatus are provided, which allows for flexible configuration of a time domain position of a cross-link interference CLI measurement resource, thereby improving CLI measurement performance. The method includes: A first network device sends first information to a first terminal device; the first terminal device correspondingly receives the first information from the first network device, where the first information indicates a first resource, and the first resource is used for measuring CLI; the first network device measures the CLI on the first resource; and the first terminal device sends a first signal to the first network device on a third resource, where the third resource does not include the first resource. The first resource is a time domain periodic resource, and/or the first resource is located in a first time domain range. The first time domain range is a time domain position of a physical uplink shared channel PUSCH in one time unit, or the first time domain range is a time domain position corresponding to each time of frequency hopping in a PUSCH.

First terminal device — First network device

S901: First information, indicating a first resource, where the first resource is used for measuring CLI, the first resource is a time domain periodic resource or located in a first time domain range, and the first time domain range is a time domain position of a PUSCH in a time unit or a time domain position corresponding to each time of frequency hopping in a PUSCH

S902: Measure the CLI on the first resource

S903: Second information, indicating a second resource, where the second resource is used for carrying the PUSCH

S904: First signal, locating on a third resource, where the third resource does not include the first resource

FIG. 9

EP 4 734 636 A1

## Description

This application claims priority to Chinese Patent Application No. 202311014175.3, filed with the China National Intellectual Property Administration on August 10, 2023 and entitled "MEASUREMENT RESOURCE CONFIGURATION METHOD AND APPARATUS", which is incorporated herein by reference in its entirety.

## TECHNICAL FIELD

Embodiments of this application relate to the communication field, and in particular, to a measurement resource configuration method and an apparatus.

## BACKGROUND

To improve uplink coverage in a mobile communication system and reduce an uplink delay, a subband full-duplex (subband full-duplex, SBFD) duplex manner may be used. In SBFD, a frequency band on a downlink symbol may be divided into an uplink subband and a downlink subband, and uplink sending is allowed on the uplink subband of the downlink symbol.

In addition, the mobile communication system further supports dynamic/flexible time division duplex (time division duplex, TDD). The dynamic/flexible TDD supports different uplink-downlink slot configurations for different cells and supports dynamic changes of the uplink-downlink slot configurations.

However, the SBFD and the dynamic/flexible TDD introduce inter-base station cross-link interference (cross-link interference, CLI), and the base station needs to measure the CLI. Therefore, how to configure a CLI measurement resource is an urgent problem to be resolved currently.

## SUMMARY

Embodiments of this application provide a measurement resource configuration method and an apparatus, which allows for flexible configuration of a time domain position of CLI measurement resource, thereby improving CLI measurement performance.

According to a first aspect, a measurement resource configuration method is provided. The method may be performed by a first network device, may be performed by a component of the first network device, for example, a processor, a chip, or a chip system of the first network device, or may be implemented by a logical module or software that can implement all or some functions of the first network device. The method includes: sending first information to a first terminal device, where the first information indicates a first resource, and the first resource is used for measuring cross-link interference CLI; and measuring the CLI on the first resource. The first resource is a time domain periodic resource, and/or the first resource is located in a first time domain range. The first time domain range is a time domain position of a physical uplink shared channel PUSCH in one time unit, or the first time domain range is a time domain position corresponding to each time of frequency hopping in a PUSCH.

According to this solution, the first resource (that is, a CLI measurement resource) may be a time domain periodic resource, so that a network device can flexibly configure a periodicity of the first resource, a time unit in which the first resource is located, a sub-time unit in which the first resource is located, and the like, thereby improving CLI measurement performance. Alternatively, the first resource may be located in a time domain position of a PUSCH in a time unit, so that the network device can flexibly configure the first resource in the time domain position of the PUSCH, thereby avoiding repetition of the first resource with a DMRS and/or UCI, and improving CLI measurement performance. Alternatively, the first resource may be located in a time domain position corresponding to each time of frequency hopping in the PUSCH, so that there is a CLI measurement resource in the time domain position corresponding to each time of frequency hopping, and CLI measurement can be performed before and after each time of frequency hopping, thereby improving CLI measurement performance.

In a possible design, the method further includes: sending second information to the first terminal device, where the second information indicates a second resource, and the second resource is a resource on which the PUSCH is located; and receiving a first signal from the first terminal device on a third resource, where the third resource is a resource that is in the second resource and that does not overlap the first resource.

According to a second aspect, a measurement resource configuration method is provided. The method may be performed by a first terminal device, may be performed by a component of the first terminal device, for example, a processor, a chip, or a chip system of the first terminal device, or may be implemented by a logical module or software that can implement all or some functions of the first terminal device. The method includes: receiving first information from a first network device, where the first information indicates a first resource, and the first resource is used for measuring cross-link interference CLI; and sending a first signal to the first network device on a third resource, where the third resource does not include the first resource. The first resource is a time domain periodic resource, and/or the first resource is located in a first time domain range. The first time domain range is a time domain position of a physical uplink shared channel PUSCH in one time unit, or the first time domain range is a time domain position corresponding to each time of frequency hopping in a PUSCH.

According to this solution, the first resource (that is, a CLI measurement resource) may be a time domain periodic resource, so that a network device can flexibly configure a periodicity of the first resource, a time unit in which the first resource is located, a sub-time unit in which the first resource is located, and the like, thereby improving CLI measurement performance. Alternatively, the first resource may be located in a time domain position of a PUSCH in a time unit, so that the network device can flexibly configure the first resource in the time domain position of the PUSCH, thereby avoiding repetition of the first resource with a DMRS and/or UCI, and improving CLI measurement performance. Alternatively, the first resource may be located in a time domain position corresponding to each time of frequency hopping in the PUSCH, so that there is a CLI measurement resource in the time domain position corresponding to each time of frequency hopping, and CLI measurement can be performed before and after each time of frequency hopping, thereby improving CLI measurement performance. In addition, the third resource does not include the first resource, that is, a terminal device does not send an uplink signal on the first resource. This can reduce interference of the uplink signal to CLI measurement, and improve CLI measurement performance.

In a possible design, the method further includes: receiving second information from the first network device, where the second information indicates a second resource, the second resource is a resource on which the PUSCH is located, and the third resource is a resource that is in the second resource and that does not overlap the first resource.

With reference to the first aspect or the second aspect, in a possible design, the first resource is a time domain periodic resource, and the first information indicates at least one of the following: a periodicity or an offset of the first resource or a sub-time unit in which the first resource is located. The offset indicates a time unit in which the first resource is located, and the time unit includes at least one sub-time unit.

Based on this possible design, the network device may flexibly configure at least one of the periodicity of the first resource, the time unit in which the first resource is located, and the sub-time unit in which the first resource is located, to improve flexibility of configuration of a CLI measurement resource.

With reference to the first aspect or the second aspect, in a possible design, the first information includes a first bitmap or a second bitmap. The first bitmap includes X bits. The X bits are in one-to-one correspondence with X sub-time units in the time unit in which the first resource is located. In the X bits, a sub-time unit corresponding to a bit whose value is a first value is the sub-time unit in which the first resource is located. X is a total quantity of sub-time units included in the time unit in which the first resource is located. The second bitmap includes Y bits. The Y bits are in one-to-one correspondence with Y sub-time units in the time unit in which the first resource is located. The Y sub-time units do not include a sub-time unit for carrying a non-demodulation reference signal DMRS. In the Y bits, a sub-time unit corresponding to a bit whose value is a first value is the sub-time unit in which the first resource is located. Y is a positive integer.

With reference to the first aspect or the second aspect, in a possible design, the time domain position of the PUSCH in the time unit includes a time domain position of repetition in each time unit in a PUSCH repetition type A, a time domain position of actual repetition in each time unit in a PUSCH repetition type B, or a time domain position of a transport block TB over multiple time units in each time unit.

Based on this possible design, CLI measurement in various PUSCH transmission scenarios can be flexibly supported. When PUSCH transmission involves multiple time units, a CLI measurement resource can exist in each time unit or a time domain position of each actual repetition, so that the network device can perform CLI measurement in each time unit or each time domain position of actual repetition, thereby improving measurement accuracy.

With reference to the first aspect or the second aspect, in a possible design, the first information indicates N sub-time units in the first time domain range, the N sub-time units are sub-time units in which the first resource is located, and N is a positive integer.

Based on this possible design, the network device may flexibly indicate the sub-time unit in which the first resource is located, thereby improving flexibility of configuring a CLI measurement resource.

With reference to the first aspect or the second aspect, in a possible design, a time domain position of the first resource satisfies at least one of the following:

the 1st sub-time unit not for carrying a non-demodulation reference signal DMRS in the first time domain range;
the 1st sub-time unit not for carrying uplink control information UCI in the first time domain range;
the 1st sub-time unit not for carrying a DMRS and not for carrying UCI in the first time domain range;
the 1st sub-time unit not for carrying a DMRS after the 1st sub-time unit for carrying a DMRS in the first time domain range;
the 1st sub-time unit not for carrying UCI after the 1st sub-time unit for carrying UCI in the first time domain range;
the 1st sub-time unit not for carrying a DMRS and UCI after the 1st sub-time unit for carrying a DMRS in the first time domain range; and

the 1st sub-time unit not for carrying a DMRS and UCI after the 1st sub-time unit for carrying UCI in the first time domain range.

With reference to the first aspect or the second aspect, in a possible design, the time domain position of the first resource does not overlap a time domain position of a fourth resource; and the fourth resource is used for carrying a DMRS, and/or the fourth resource is used for carrying the UCI.

With reference to the first aspect or the second aspect, in a possible design, that the first information indicates the first resource includes: The first information indicates a fifth resource, where the fifth resource is used for measuring the CLI. The first resource includes a resource that is in the fifth resource and that does not overlap the fourth resource, and the fourth resource is used for carrying the DMRS, and/or the fourth resource is used for carrying the UCI.

With reference to the first aspect or the second aspect, in a possible design, the first resource further includes M sub-time units after the fifth resource, and M is a quantity of sub-time units occupied by the fourth resource.

Based on the foregoing four possible designs, it can be ensured that a resource actually used for measuring the CLI does not overlap a time domain position of the DMRS and/or a time domain position of the UCI, thereby avoiding impact of CLI measurement on the DMRS and/or the UCI, reducing impact of the CLI measurement on uplink data demodulation and/or UCI transmission, and improving uplink data and/or UCI transmission performance.

With reference to the first aspect or the second aspect, in a possible design, the UCI satisfies at least one of the following.

The UCI is hybrid automatic repeat request-acknowledgment HARQ-ACK information.

The UCI includes HARQ-ACK information and a channel state information-reference signal CSI-RS part 1.

The UCI includes HARQ-ACK information, a CSI-RS part 1, and joint coding of HARQ-ACK and configured grant-UCI.

The UCI includes HARQ-ACK information, a CSI-RS part 1, a CSI-RS part 2, configured grant-UCI, and joint coding of HARQ-ACK and the configured grant-UCI.

The UCI is joint coding of HARQ-ACK and CG-UCI.

The UCI includes HARQ-ACK information and joint coding of HARQ-ACK and CG-UCI.

With reference to the first aspect or the second aspect, in a possible design, the first resource occupies P resource elements REs in one resource block RB, an index difference between any two adjacent REs in the P REs is Q/P, Q is a total quantity of REs included in the RB, and P and Q are positive integers.

With reference to the first aspect or the second aspect, in a possible design, an index i of a resource element RE occupied by the first resource in a resource block RB satisfies:

$$i = nL + k,$$

where

L is a divisor of Q, Q is a quantity of REs included in an RB, k is one of 0, 1,..., $L$ - 1, $n = 0, 1, \ldots, \frac{Q}{L} - 1$, and L is an integer greater than 1.

Based on the foregoing two possible designs, the REs occupied by the first resource can be distributed in combs, so that REs not used for the first resource can be used for carrying another signal, thereby improving resource utilization.

With reference to the first aspect or the second aspect, in a possible design, the method further includes: sending third information to a second network device, where the third information indicates the first resource.

Based on this possible design, the first network device indicates the first resource to the second network device, so that the second network device can perform CLI measurement by using a same resource, and there may be no uplink signal sent by the terminal device to the network device on the measurement resource (for example, the first resource). Therefore, impact on inter-base station CLI measurement is reduced, and accuracy of the CLI measurement is improved.

According to a third aspect, a communication apparatus is provided. The communication apparatus includes a unit or a module. The unit or the module is configured to perform the method according to the first aspect or the second aspect. The module or unit may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided. The communication apparatus includes a processor. The processor is configured to perform the method according to the first aspect or the second aspect. There may be one or more processors. The communication apparatus may further include a memory. The memory is configured to store computer instructions. When the processor executes the instructions, the communication apparatus is caused to perform the method according to the first aspect or the second aspect. The memory may be coupled to the processor, or may be independent of the processor. The communication apparatus may further include a communication interface, and the communication interface is configured to communicate with a module outside the communication apparatus.

The communication apparatus in the third aspect and the fourth aspect may be the first network device in the first aspect, or an apparatus included in the first network device, for example, a chip or a chip system. Alternatively, the communication apparatus may be the first terminal device in the second aspect, or an apparatus included in the first terminal device, for example, a chip or a chip system. When the communication apparatus is a chip, a sending action/function of the communication apparatus may be understood as output information, and a receiving action/function of the communication apparatus may be understood as input information.

According to a fifth aspect, a computer-readable storage medium is provided. The computer-readable storage medium stores a computer program or instructions. When the computer program or instructions are run on a communication apparatus, the communication apparatus is caused to perform the method according to the first aspect or the second aspect.

According to a sixth aspect, a computer program product including instructions is provided. When the computer program product is run on a communication apparatus, the communication apparatus may be caused to perform the method according to the first aspect or the second aspect.

According to a seventh aspect, a measurement resource configuration method is provided. The method includes the method according to any one of the first aspect and the method according to any one of the second aspect.

According to an eighth aspect, a communication system is provided. The communication system includes a communication apparatus configured to perform the method according to the first aspect in the third aspect or the fourth aspect, and a communication apparatus configured to perform the method according to the second aspect in the third aspect or the fourth aspect.

For technical effects brought by any design of the third aspect to the eighth aspect, refer to technical effects brought by different designs of the first aspect or the second aspect. Details are not described herein again.

## BRIEF DESCRIPTION OF DRAWINGS

FIG. 1 is a diagram of an uplink-downlink slot configuration according to this application;
FIG. 2 is a diagram of an SBFD scenario according to this application;
FIG. 3 is a diagram of a flexible TDD scenario according to this application;
FIG. 4 is a diagram of a position of a CSI-IM resource according to this application;
FIG. 5 is a diagram of a position of a CLI measurement resource according to this application;
FIG. 6 is a diagram of a position of a PDCCH according to this application;
FIG. 7 is a diagram of frequency hopping in a PUSCH according to this application;
FIG. 8 is a diagram of a structure of a communication system according to this application;
FIG. 9 is a schematic flowchart of a measurement resource configuration method according to this application;
FIG. 10A and FIG. 10B are a diagram of a position of a first time domain range according to this application;
FIG. 11 is another diagram of a position of a first time domain range according to this application;
FIG. 12 is a diagram of a time domain position of a first resource according to this application;
FIG. 13 is another diagram of a time domain position of a first resource according to this application;
FIG. 14 is still another diagram of a time domain position of a first resource according to this application;
FIG. 15 is still another diagram of a time domain position of a first resource according to this application;
FIG. 16 is a diagram of a frequency domain position of a first resource according to this application;
FIG. 17 is another diagram of a frequency domain position of a first resource according to this application;
FIG. 18 is a diagram of a structure of a communication apparatus according to this application;
FIG. 19 is a diagram of a structure of another communication apparatus according to this application; and
FIG. 20 is a diagram of a structure of still another communication apparatus according to this application.

## DESCRIPTION OF EMBODIMENTS

In the descriptions of this application, unless otherwise specified, "/" indicates that associated objects are in an "or" relationship. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural.

In addition, in the descriptions of this application, "multiple" means two or more than two unless otherwise specified. "At least one of the following items (pieces)" or a similar expression thereof means any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the term such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatuses provided in embodiments of this application may also correspondingly implement these features or functions. Details are not described herein.

In this application, unless otherwise specified, mutual reference may be made between same or similar parts of embodiments. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

For ease of understanding of the technical solutions in embodiments of this application, the following first briefly describes technologies related to this application.

1. Subband full-duplex (subband full-duplex, SBFD)

Time division duplex (time division duplex, TDD) is widely applied to a fifth generation (fifth generation, 5G) mobile communication system. In TDD, transmission and reception are separated in time domain, and time domain resources are divided into uplink resources and downlink resources. A terminal device performs sending on an uplink resource, and performs receiving on a downlink resource.

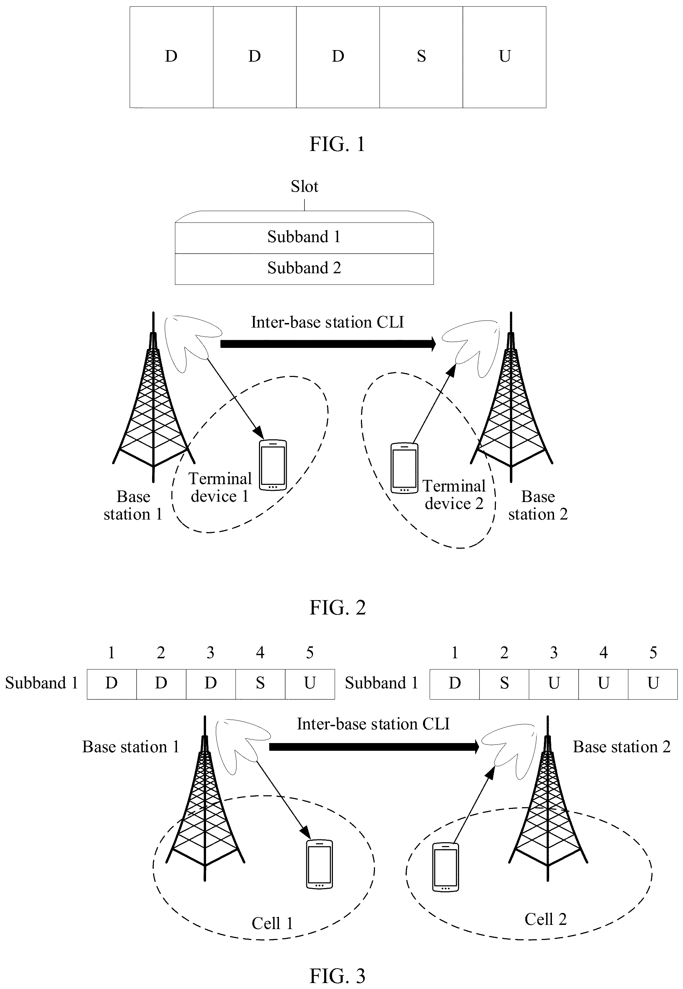

For example, as shown in FIG. 1, a possible TDD uplink-downlink slot configuration is DDDSU. D represents a downlink slot, U represents an uplink slot, and S represents a special slot. Each orthogonal frequency division multiplexing (orthogonal frequency division multiplexing, OFDM) symbol (hereinafter referred to as a symbol) in the downlink slot is a downlink symbol used for downlink transmission. Each symbol in the uplink slot is an uplink symbol, and is used for uplink transmission. The special slot includes at least a flexible symbol, and the flexible symbol may be used for both downlink transmission and uplink transmission.

In a common TDD uplink-downlink slot configuration, uplink time domain resources are usually small. Consequently, uplink coverage of TDD is reduced, and a delay is increased. A possible uplink enhancement method is to use SBFD.

In SBFD, a frequency band on a downlink symbol is divided into at least one uplink subband and at least one downlink subband, and the terminal device is allowed to perform uplink sending on the uplink subband of the downlink symbol. Subbands in SBFD may overlap or may not overlap. This is not specifically limited in this application.

For example, as shown in FIG. 2, in a specific slot, a subband 1 and a subband 2 may be divided in frequency domain. Downlink transmission is allowed on the subband 1, and uplink transmission is allowed on the subband 2.

Currently, a base station supports full-duplex (full-duplex, FD) SBFD. To be specific, in one slot, the base station may perform receiving on an uplink subband and perform sending on a downlink subband. The terminal device supports half-duplex (half-duplex, HD) SBFD. To be specific, in one slot, the terminal device can perform sending only on an uplink subband, or can perform receiving only on a downlink subband.

2. Dynamic/Flexible TDD

The dynamic/flexible TDD supports different uplink-downlink slot configurations for different cells and supports dynamic changes of the uplink-downlink slot configurations. For example, as shown in FIG. 3, an uplink-downlink slot configuration used by a cell 1 is DDDSU, and an uplink-downlink slot configuration used by a cell 2 is DSUUU.

3. Cross-link interference (cross-link interference, CLI)

The CLI can be understood as interference between communication links in opposite directions, for example, interference from an uplink to a downlink, or interference from a downlink to an uplink.

In an SBFD mechanism or a dynamic TDD mechanism, inter-base station CLI is usually introduced. For example, a downlink signal sent by a base station 1 causes interference to receiving of an uplink signal by a base station 2. It should be noted that, unless otherwise specified, the CLI in the following embodiments of this application is inter-base station CLI or referred to as inter-network device CLI.

For example, as shown in FIG. 2, it is assumed that a base station 1 sends a downlink signal 1 to a terminal device 1 on a subband 1, and a base station 2 receives an uplink signal 2 of a terminal device 2 on a subband 2. In this case, interference caused by the downlink signal 1 sent by the base station 1 to receiving of the uplink signal 2 by the base station 2 may be considered as inter-base station CLI. In addition, because the base station supports FD SBFD, a downlink signal sent by the base station 2 on the subband 1 also causes CLI to a signal received by the base station 1 on the subband 2.

Alternatively, as shown in FIG. 3, it is assumed that simultaneously, an uplink-downlink slot configuration used by a cell 1 of a base station 1 is DDDSU, and an uplink-downlink configuration used by a cell 2 of a base station 2 is DSUUU. If the base station 1 is synchronized with the base station 2, in a slot 3, a downlink signal sent by the base station 1 causes CLI to an uplink signal received by the base station 2.

Because the inter-base station CLI exists, the inter-base station CLI needs to be measured and compensated, so as to suppress impact of the inter-base station CLI on uplink communication.

In a possible implementation, inter-base station CLI measurement may be performed by using a channel state information-interference measurement (channel state information-interference measurement, CSI-IM) resource.

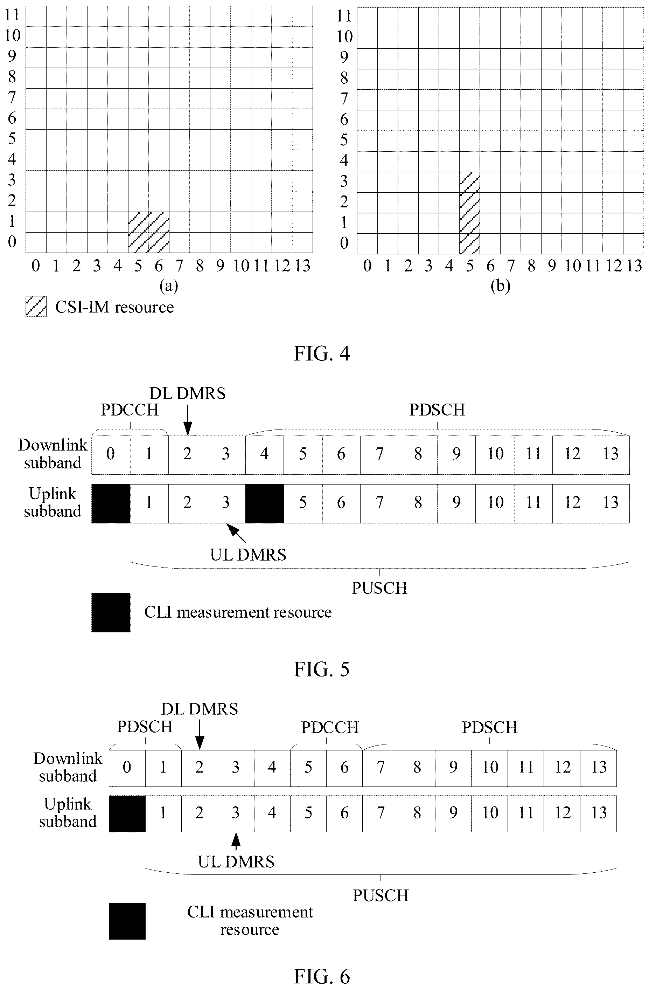

The CSI-IM resource is originally used for inter-cell downlink interference measurement. The CSI-IM resource supports two time-frequency patterns: pattern 0 and pattern 1. Each time-frequency pattern occupies four resource elements (resource element, RE), but time-frequency positions of the two patterns are different. As shown in (a) in FIG. 4, in the pattern 0, the CSI-IM resource occupies two consecutive symbols in time domain; and as shown in (b) in FIG. 4, in the pattern 1, the CSI-IM resource occupies one symbol in time domain.

It should be noted that, in the accompanying drawings of time-frequency resources in embodiments of this application, a horizontal axis represents a time domain, and a vertical axis represents a frequency domain. This is uniformly described herein, and details are not described in subsequent embodiments.

However, if the CSI-IM resource is directly used to perform inter-base station CLI measurement, the following problems may exist.

(1) The CSI-IM resource may conflict with a time-frequency resource multiplexed by uplink control information (uplink control information, UCI), resulting in deterioration of UCI multiplexing performance.

For example, a cause of the problem is that inter-base station CLI measurement needs to be performed by a base station that performs uplink receiving, that is, a resource used for measuring CLI may be understood as an uplink resource, and UCI is also sent on the uplink resource. Therefore, a conflict may exist between the CLI and the UCI.

(2) Inter-base station CLI caused by different downlink channels cannot be measured in a same slot.

Generally, inter-base station CLI induced by a physical downlink control channel (physical downlink control channel, PDCCH) and a physical downlink shared channel (physical downlink shared channel, PDSCH) are different, and needs to be measured separately. However, because CSI-IM occupies one symbol or two consecutive symbols in one slot, the PDCCH and the PDSCH are generally not located on one symbol or two consecutive symbols. Therefore, inter-base station CLI caused by a PDCCH and a PDSCH cannot be measured in a same slot.

In another possible implementation, as shown in FIG. 5, a resource used for inter-base station CLI measurement (hereinafter referred to as a CLI measurement resource) may be located on the 1st symbol (for example, a symbol 0 in FIG. 5) in a slot, or may be located on the 1st symbol (for example, a symbol 4 in FIG. 5) after the 1st demodulation reference signal (demodulation reference signal, DMRS) of a PUSCH.

However, when the CLI measurement resource is located in the 1st symbol in the slot, the inter-base station CLI caused by the PDCCH may not be measured. For example, the PDCCH may be located on any symbol in the slot. As shown in FIG. 6, if the PDCCH is located on a symbol 5 and a symbol 6 in a slot, and the CLI measurement resource is located on a symbol 0 in the slot, because the CLI measurement resource and the PDCCH have different time domain positions, the inter-base station CLI caused by the PDCCH cannot be measured.

In addition, in a scenario of frequency hopping in a PUSCH slot, a frequency domain position of the PUSCH changes after frequency hopping, and the inter-base station CLI also changes. After frequency hopping, the CLI needs to be measured again. If the CLI measurement resource is located only on the 1st symbol after the 1st DMRS of the PUSCH, the inter-base station CLI after frequency hopping cannot be measured.

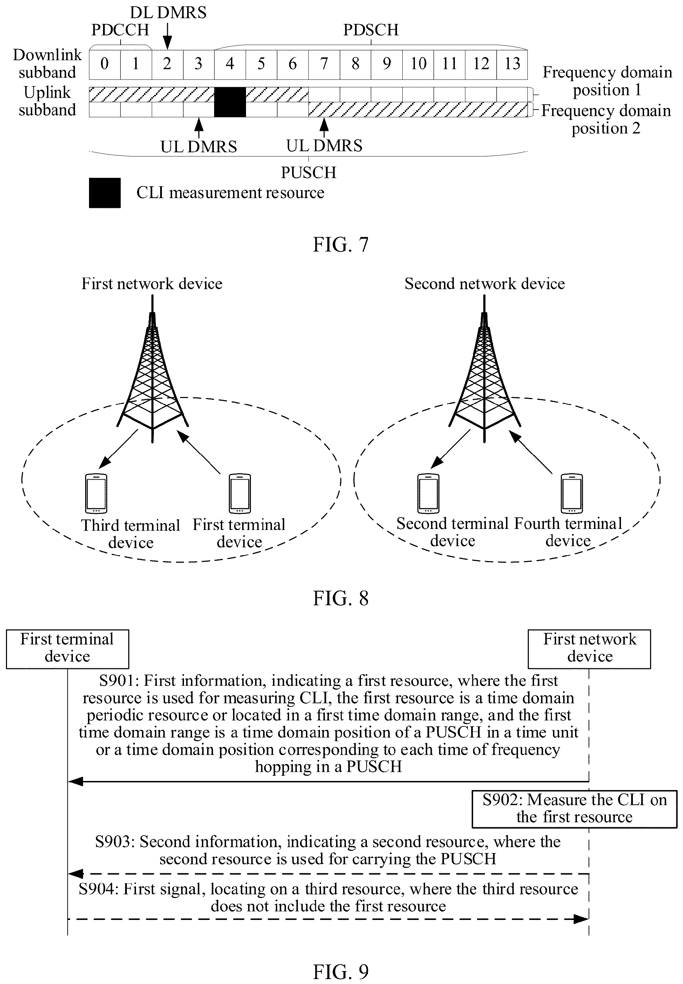

For example, as shown in FIG. 7, the 1st DMRS of the PUSCH is located on a symbol 3, and the 1st symbol after the 1st DMRS is a symbol 4. Assuming that a frequency domain position of the PUSCH on a symbol 0 to a symbol 6 is a frequency domain position 1, and frequency hopping occurs after the symbol 6, that is, a frequency domain position of the PUSCH on symbols 7 to 13 is a frequency domain position 2, the inter-base station CLI before frequency hopping can be measured only on the symbol 4. There are no CLI measurement resources in other positions. Therefore, the inter-base station CLI cannot be measured after frequency hopping.

In conclusion, in the foregoing solution, a quantity of symbols occupied by the CLI measurement resource in time domain is fixed, or a time domain position is fixed, resulting in low flexibility. Based on this, this application provides a measurement resource configuration method, to flexibly arrange a time domain position of a CLI measurement resource, thereby improving measurement performance.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, an internet of things (Internet of Things, IoT) system, a non-terrestrial network (non-terrestrial network, NTN) system, and another next generation communication system. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

FIG. 8 shows an example communication system according to this application. The communication system includes a first network device and a first terminal device. Uplink transmission exists between the first network device and the first terminal device.

Optionally, the communication system may further include a second network device and a second terminal device. Downlink transmission exists between the second network device and the second terminal device. The second network device may be understood as a neighboring station of the first network device. Alternatively, the first network device may be understood as a neighboring station of the second network device.

Further, the communication system may further include a third terminal device and a fourth terminal device. The third terminal device is a terminal device served by the first network device, and downlink transmission may exist between the third terminal device and the first network device. The fourth terminal device is a terminal device served by the second network device, and uplink transmission may exist between the fourth terminal device and the second network device.

In a possible implementation scenario, downlink transmission between the second network device and the second terminal device causes interference to receiving an uplink signal of the first terminal device by the first network device, that is, inter-base station CLI exists between the first network device and the second network device.

It should be noted that FIG. 8 is merely a diagram. The communication system may further include another device, for example, may further include a wireless relay device, a wireless backhaul device, a core network device/network element, and the like, which are not shown in FIG. 8. A quantity of network devices and a quantity of terminal devices in FIG. 8 are merely examples. The communication system may include more or fewer network devices or terminal devices than those shown in FIG. 8.

In embodiments of this application, the terminal device may be a user side device having a wireless transceiver function, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle (uncrewed aerial vehicle, UAV) to uncrewed aerial vehicle (UAV to UAV, U2U) communication capability, or the like. The terminal device may be mobile, or may be fixed. This is not specifically limited in this application.

In embodiments of this application, the network device may be a network side device having a wireless transceiver function, or may be a chip or a chip system disposed in the device, and is located in a radio access network (radio access network, RAN) in a mobile communication system, and is configured to provide an access service for the terminal device. The network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a broadband network service gateway (broadband network gateway, BNG), an aggregation switch, or a non-3GPP access device; or may be a radio controller in a cloud radio access network (cloud radio access network, CRAN); or may be an access node (access point, AP) in a Wi-Fi system; or may be a wireless relay node or a wireless backhaul node; or may be a device that implements a base station function in IoT, V2X, D2D, or M2M. This is not specifically limited in embodiments of this application. For example, the base station in embodiments of this application may include base stations in various forms, for example, a macro base station, a micro base station (which is also referred to as a small cell), a relay station, and an access point. This is not specifically limited in embodiments of this application.

In some implementation scenarios, the network device may alternatively be a module or unit that can implement a part or all of functions of the base station. For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the network device may be a network device in an open radio access network (open RAN, ORAN) system or a module of the network device. In an ORAN system, the CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by using a software module, a hardware module, or a combination of a software module and a hardware module.

In some implementation scenarios, the network device may also be referred to as a radio access network (radio access network, RAN) node, a RAN device, or an access network device, or the network device may be named in another manner. This is not specifically limited in this application.

Alternatively, all or some functions of the terminal device or the network device in this application may be implemented by using a software function running on hardware, or may be implemented by using a virtualized function instantiated on a platform (for example, a cloud platform). Alternatively, the terminal device or the network device in this application may be a logical node, a logical module, or software that can implement all or some functions of the terminal device or the network device.

With reference to the accompanying drawings, the following describes in detail the measurement resource configuration method provided in embodiments of this application through interaction between the network device and the terminal device shown in FIG. 8 as an example.

It can be understood that, in embodiments of this application, the network device or the terminal device may perform some or all of steps or operations in embodiment of this application. These steps or operations are merely examples. In embodiments of this application, other steps or operations or variations of various steps or operations may be further performed. In addition, the steps or operations may be performed in a sequence different from that presented in embodiments of this application, and not all the steps or operations in embodiments of this application may be necessarily performed. For example, when the first network device is a CU, a DU, or an RU, only some steps or operations performed by the first network device described in embodiments of this application may be performed, and other operations are performed by at least one other network device.

It should be noted that names of messages between devices, names of parameters in the messages, or the like in the following embodiments of this application are merely examples, and the names thereof may be other names in specific implementation. This is not specifically limited in embodiments of this application.

FIG. 9 is a schematic flowchart of a measurement resource configuration method according to an embodiment of this application. The measurement resource configuration method includes the following steps.

S901: A first network device sends first information to a first terminal device. Correspondingly, the first terminal device receives the first information from the first network device.

The first information indicates a first resource, and the first resource is used for measuring CLI. Specifically, the first resource is used for inter-base station CLI (which may also be referred to as inter-network device CLI) measurement.

In a possible implementation, the first resource is a time domain periodic resource. That is, the first resource is periodically repeated in time domain. For example, a repetition periodicity of the first resource may be in a unit of a slot, a symbol, or the like, or may be in a unit of duration (for example, millisecond (ms)).

In another possible implementation, the first resource is located in a first time domain range. The first time domain range is a time domain position of a PUSCH in one time unit, or the first time domain range is a time domain position corresponding to each time of frequency hopping in a PUSCH.

In a possible implementation, the time unit in this embodiment of this application may further include multiple sub-time units. For example, the time unit may be a radio frame, a half frame, a subframe, a slot, a mini-subframe, a mini-slot, a transmission occasion (transmission occasion, TO), or the like. The sub-time unit may be a half frame, a subframe, a slot, an OFDM symbol, or the like.

Optionally, the first information may further indicate that the first terminal device cannot send an uplink signal on the first resource, or indicate that the first terminal device is not allowed to send the uplink signal on the first resource, or indicate that the first resource is not used for carrying the uplink signal.

The first resource is used for measuring inter-base station CLI, that is, is used for measuring interference caused by another network device (for example, a second network device) to uplink reception of the first network device. Therefore, the first terminal device is not expected to send the uplink signal on the first resource. If the first terminal device sends the uplink signal on the first resource, when inter-base station CLI measurement is performed on the first resource, the uplink signal of the first terminal device also exists on the first resource, and the uplink signal affects accuracy of the inter-base station CLI measurement.

In a possible implementation, the first information may be carried in radio resource control (radio resource control, RRC) signaling. In this scenario, it may be considered that the first resource is semi-statically configured by using RRC signaling.

Optionally, when the first information is carried in the RRC signaling, the first information may be cell-level information. To be specific, the first network device may send the first information to all terminal devices in a current cell to indicate the first resource. The current cell may be understood as a current serving cell of the first terminal device.

In another possible implementation, the first information may be carried in downlink control information (downlink control information, DCI). In this scenario, before the first information, the first network device may configure a first resource set for the first terminal device, and resources in the first resource set may be used for measuring the CLI. The first information may indicate the first resource from the first resource set. The first resource may be one or more resources in the first resource set. When the first information indicates multiple resources in the first resource set, the multiple resources become valid simultaneously, and are all used for measuring the CLI. For example, the first network device may configure the first resource set for the first terminal device by using RRC signaling. To be specific, the first network device may semi-statically configure the first resource set by using the RRC signaling, and then dynamically indicate the first resource by using the DCI.

Optionally, when the first information is carried in the DCI, the first resource set may be cell-level information. To be specific, the first network device may configure the first resource set for all terminal devices in a current cell.

When the first network device indicates the first resource or the first resource set to all terminal devices in the current cell, the first network device expects that none of the terminal devices in the current cell sends an uplink signal on the first resource or a resource in the first resource set. In this scenario, the terminal device in the current cell may learn that the first resource or the first resource set is used for measuring the CLI, so that the terminal device may not send the uplink signal on the first resource or the resource in the first resource set, thereby reducing impact on CLI measurement.

S902: The first network device measures the CLI on the first resource.

In a possible implementation, the first network device measures, on the first resource, inter-base station CLI caused by the second network device to the first network device.

In a possible implementation, the second network device may send a downlink signal (denoted as a second signal) to a second terminal device. The first network device may measure, on the first resource, signal quality, signal strength, a covariance matrix, or the like of the second signal sent by the second network device to the second terminal device. The signal quality, the signal strength, or the covariance matrix may be understood as the inter-base station CLI caused by the second network device to the first network device.

In a possible implementation, the method may further include the following steps.

S903: The first network device sends second information to the first terminal device. Correspondingly, the first terminal device receives the second information from the first network device.

The second information indicates a second resource. The second resource is a resource on which the PUSCH is located, or the second resource is used for carrying the PUSCH. For example, the second information may be carried in DCI or RRC signaling for scheduling the PUSCH.

In a possible implementation, the second resource overlaps the first resource in time domain and/or frequency domain.

It should be noted that there is no time sequence between step S903 and step S901. Step S903 may be performed first, and then step S901 is performed. Alternatively, step S901 may be performed first, and then step S903 is performed. Alternatively, steps S901 and S903 may be performed simultaneously. That is, the second information may be sent before, after, or at the same time as the first information. This is not specifically limited in this application.

Optionally, the first information and the second information may be carried in a same message, or the first information and the second information may be carried in different messages. This is not specifically limited in this application.

S904: The first terminal device sends the first signal to the first network device on a third resource. Correspondingly, the first network device receives the first signal from the first terminal device on the third resource.

The third resource does not include the first resource. The third resource is a resource that is in the second resource and that does not overlap the first resource.

In a possible implementation, before step S904, the first terminal device may determine the third resource based on the first information and the second information. For example, the third resource is a difference set between the second resource and the first resource, that is, the third resource is a resource that is in the second resource and that does not overlap the first resource. In addition, before step S904, the first network device also needs to determine the third resource. A determining manner is consistent with that of the first terminal device. Details are not described herein again.

In a possible implementation, before step S904, the first terminal device may generate the first signal in the following two manners.

Manner 1: The first signal is generated through rate matching. For example, in Manner 1, the first terminal device may perform the following steps.

(1) Determine, based on a size of the third resource, a total quantity G of coded bits that can be used for TB transmission.

For example, the total quantity of coded bits may be determined based on a total quantity of REs included in the third resource, a modulation order of the first signal, and a quantity of layers (which is also referred to as a quantity of transport layers or a quantity of streams) of the first signal. For example, the total quantity of coded bits satisfies the following relationship.

$$G = N_{RE,3} \times Q_m \times N_L$$

$N_{RE,3}$ represents the total quantity of REs included in the third resource. $Q_m$ represents the modulation order of the first signal. $N_L$ represents the quantity of layers of the first signal.

(2) Perform channel coding and rate matching on an uplink TB based on the total quantity G of coded bits.

(3) Map a bit sequence output through rate matching to the third resource.

Manner 2: The first signal is generated through puncturing. For example, in Manner 2, the first terminal device may perform the following steps.

(1) Determine, based on a size of the second resource, a total quantity G of coded bits that can be used for TB transmission.

For example, the total quantity of coded bits may be determined based on a total quantity of REs included in the second resource, a modulation order of the first signal, and a quantity of layers (which is also referred to as a quantity of transport layers or a quantity of streams) of the first signal. For example, the total quantity of coded bits satisfies the following relationship.

$$G = N_{RE,2} \times Q_m \times N_L$$

$N_{RE,2}$ represents the total quantity of REs included in the second resource. $Q_m$ represents the modulation order of the first signal. $N_L$ represents the quantity of layers of the first signal.

(2) Perform channel coding and rate matching on an uplink TB based on the total quantity G of coded bits.

(3) Map a bit sequence output through rate matching to the second resource.

(4) Drop a bit on an RE that is in the second resource and that overlaps the first resource.

Optionally, a resource mapping result obtained in step (3) in Manner 1 or step (4) in Manner 2 may be understood as a signal of the first signal in frequency domain. Then, the first terminal device may convert the resource mapping result into a time domain signal, and send the time domain signal to the first network device.

It may be understood that when the second resource and the first resource do not overlap, the third resource is the second resource, and results of Manner 1 and Manner 2 are the same.

It should be noted that there is no time sequence between step S904 and step S902. Step S902 may be performed first, and then step S904 may be performed. Alternatively, step S904 may be performed first, and then step S902 may be performed. Alternatively, step S902 and step S904 may be performed simultaneously. This is not specifically limited in this application.

In a possible implementation, the first network device may further send a downlink signal (denoted as a third signal) to a third terminal device. Correspondingly, the third terminal device receives the third signal from the first network device. A fourth terminal device may further send an uplink signal (denoted as a fourth signal) to the second network device. Correspondingly, the second network device receives the fourth signal from the fourth terminal device.

Optionally, the first signal, the second signal, the third signal, and the fourth signal may be simultaneously transmitted, that is, transmission time or time domain positions of the four signals overlap or are the same.

In this scenario, the third signal sent by the first network device to the third terminal device may cause interference to receiving of the fourth signal by the second network device. In other words, the first network device also causes inter-base station CLI to the second network device. In this case, the second network device may also measure the inter-base station CLI on the first resource.

Optionally, after determining the first resource or the first resource set, the first network device may send third information to the second network device, where the third information indicates the first resource or the first resource set. After receiving the third information, the second network device may send fourth information to a terminal device served by the second network device to indicate the first resource, or the fourth information may further indicate that the terminal device does not send the uplink signal on the first resource.

For example, the terminal device served by the second network device may be the third terminal device or all terminal devices in a first cell. The first cell is a serving cell of the third terminal device managed by the second network device. In addition, for implementation of the fourth information, refer to related descriptions of the first information. For behaviors of the second network device, refer to related descriptions of the first network device. For behaviors of the fourth terminal device, refer to related descriptions of the first terminal device. The behaviors of the second terminal device are similar to behaviors of the third terminal device.

Optionally, the first network device may further indicate the first resource or the first resource set to another network device other than the second network device. After learning of the first resource or the first resource set, the another network device may also indicate that the terminal device served by the another network device does not send an uplink signal on the first resource or the first resource set, and may perform inter-base station CLI measurement on the first resource or the first resource set.

Based on this solution, because multiple adjacent network devices use a same resource to perform CLI measurement, there may be no uplink signal sent by the terminal device to the network device on the measurement resource (for example, the first resource). Therefore, impact on inter-base station CLI measurement is reduced, and accuracy of the CLI measurement is improved.

In the measurement resource configuration method provided in this embodiment of this application, the first resource (that is, the CLI measurement resource) may be a time domain periodic resource, so that the network device can flexibly configure a periodicity of the first resource, a time unit in which the first resource is located, and a sub-time unit in which the first resource is located, thereby improving CLI measurement performance. Alternatively, the first resource may be located in a time domain position of a PUSCH in a time unit, so that the network device can flexibly configure the first resource in the time domain position of the PUSCH, thereby avoiding repetition of the first resource with a DMRS and/or UCI, and improving CLI measurement performance. Alternatively, the first resource may be located in a time domain position corresponding to each time of frequency hopping in the PUSCH, so that there is a CLI measurement resource in the time domain position corresponding to each time of frequency hopping, and CLI measurement can be performed before and after each time of frequency hopping, thereby improving CLI measurement performance.

Based on the foregoing solution, because the network device can learn of a time-frequency resource position of the UCI, the CLI measurement resource may not overlap a time domain position of the UCI as much as possible when the network device configures the CLI measurement resource. In addition, multiple OFDM symbols may be configured in one slot as CLI measurement resources. For example, CLI measurement resources are configured on OFDM symbols corresponding to time domain positions of a PDCCH and a PDSCH, so that inter-base station CLI measurement caused by the PDCCH and the PDSCH in a same slot is implemented. In addition, a position of the CLI measurement resource may be flexibly adjusted based on a position of the PDCCH, so that the network device can measure inter-base station CLI caused by the PDCCH. In addition, a CLI measurement resource may be configured at a time domain position corresponding to each time of frequency hopping of the PUSCH, so that the network device can perform CLI measurement before and after each time of frequency hopping, PUSCH frequency hopping can be flexibly supported, and measurement performance in a PUSCH frequency hopping scenario is improved.

The foregoing describes an overall procedure of the measurement resource configuration method provided in embodiments of this application. The following describes the first resource and the first information in detail.

In a possible implementation, when the first resource is a time domain periodic resource, the first information indicates at least one of the following: a periodicity (which is also referred to as a repetition offset) or an offset (which is also referred to as a repetition offset) of the first resource or a sub-time unit in which the first resource is located. The offset indicates a time unit in which the first resource is located.

For example, a value of the periodicity T of the first resource may be one of {1, 2, 4, 5, 8, 10, 16, 20, 32, 40, 64, 80, 160, 320, 640}, and correspondingly, a value of the offset *offset* may be *offset* = 0, 1, ..., $T$ - 1. A unit of the periodicity and a unit of the offset may be a time unit. That the offset is equal to x may be understood as follows: The time unit in which the first resource is located is the $(x+1)^{th}$ time unit in one periodicity of the first resource, or the time unit in which the first resource is located is the $(x+1)^{th}$ time unit in T time units. For example, if T is equal to 4, and the offset is equal to 0, the time unit in which the first resource is located may be a time unit 0, a time unit 4, a time unit 8, a time unit 12, or the like.

When the first information indicates the sub-time unit in which the first resource is located:
In a possible implementation, the first information may include a first bitmap. The first bitmap includes X bits. The X bits are in one-to-one correspondence with X sub-time units in the time unit in which the first resource is located. X is a total quantity of sub-time units included in the time unit in which the first resource is located. In the X bits, a sub-time unit corresponding to a bit whose value is a first value is the sub-time unit in which the first resource is located, and a sub-time unit corresponding to a bit whose value is a second value is not the sub-time unit in which the first resource is located.

For example, the first value may be "1", and correspondingly, the second value may be "0". Alternatively, the first value may be "0", and correspondingly, the second value may be "1".

For example, an example in which the time unit is a slot, the sub-time unit is an OFDM symbol, X is equal to 14, and the first value is equal to "1" is used. When the first bitmap is a {0, 0, 1, 1, 1, 1, 1, 1, 1, 1, 1, 1, 0, 0}, it indicates that OFDM symbols in which the first resource is located are 10 OFDM symbols in the middle of the slot. If indexes of the 14 OFDM symbols in the slot are 0 to 13, the first resource is OFDM symbols whose indexes are 2 to 11 in the slot.

In another possible implementation, the first information may include a second bitmap. The second bitmap includes Y bits. The Y bits are in one-to-one correspondence with Y sub-time units in the time unit in which the first resource is located. The Y sub-time units do not include a sub-time unit for carrying a DMRS. To be specific, the Y bits in the second bitmap are in one-to-one correspondence with OFDM symbols other than the symbol in which the DMRS is located. In the Y bits, a sub-time unit corresponding to a bit whose value is a first value is the sub-time unit in which the first resource is located. Y is a positive integer. Y is less than or equal to X. For the first value, refer to the foregoing related descriptions. Details are not described herein again.

For example, an example in which the time unit is a slot, the sub-time unit is an OFDM symbol, X is equal to 14, the first value is equal to "1", and indexes of 14 OFDM symbols in the slot are 0 to 13 is used. Assuming that OFDM symbols whose indexes are 2 and 3 are used to carry DMRSs, Y is equal to 12, the first two bits in the bitmap are respectively corresponding to OFDM symbols whose indexes are 0 and 1, and the last 10 bits are respectively corresponding to OFDM symbols whose indexes are 4 to 13. When the second bitmap is a {0, 0, 1, 1, 1, 1, 1, 1, 1, 0, 0}, it indicates that the first resource is OFDM symbols whose indexes are 4 to 11 in the slot.

In a possible implementation, when the first resource is in the first time domain range, the PUSCH in this embodiment of this application may have the following four cases.

Case 1: No PUSCH repetition

In Case 1, the PUSCH is usually located in one time unit, that is, a time domain resource in which the PUSCH is located is located in one time unit. The PUSCH in the time unit may be understood as one PUSCH. In this case, that the first time domain range is a time domain position of a PUSCH in one time unit may also be understood as that the first time domain range is the time domain position of the PUSCH.

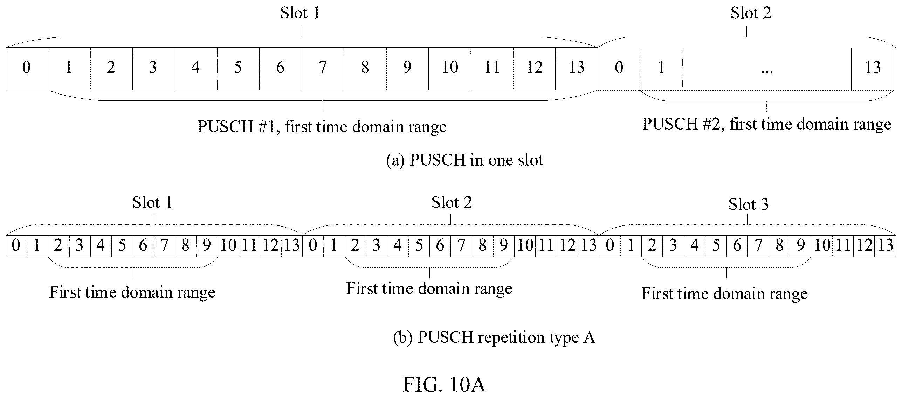

For example, as shown in (a) in FIG. 10A, an example in which a time unit is a slot, and a sub-time unit is an OFDM symbol is used. It is assumed that a PUSCH #1 is transmitted in a slot 1 and occupies OFDM symbols 1 to 13 in the slot 1, and a PUSCH #2 is transmitted in a slot 2 and occupies OFDM symbols 1 to 13 in the slot 2. In this case, for the PUSCH #1, the first time domain range is the symbols 1 to 13 in the slot 1. For the PUSCH #2, the first time domain range is the symbols 1 to 13 in the slot 2.

Case 2: PUSCH repetition type A (PUSCH repetition type A)

In the PUSCH repetition type A, the PUSCH is repeated for K times, and is repeated only once in one time unit. In other words, the PUSCH is repeated K times in total in K time units, and a time domain position of the PUSCH remains the same in each time unit. K is a positive integer.

In a possible implementation, that the PUSCH is repeated for K times may be understood as that the PUSCH is transmitted for K times in total. In this case, the 1st PUSCH transmission may also be understood as one PUSCH repetition.

In a possible implementation, the K times of PUSCH repetition may be understood as one PUSCH, and a time domain position of the PUSCH is located in the K time units. In this case, a time domain position of repetition (repetition) in each time unit may be understood as one first time domain range. In other words, that the first time domain range is the time domain position of the PUSCH in one time unit may be understood as: The first time domain range is a time domain position of repetition in each time unit in the PUSCH repetition type A.

Optionally, the time domain position of repetition in the time unit may also be understood as a time domain position used for PUSCH repetition in the time unit or the time domain position of the PUSCH in the time unit. The three may be replaced with each other.

For example, as shown in (b) in FIG. 10A, an example in which a time unit is a slot, a sub-time unit is an OFDM symbol, and K is equal to 3, that is, the PUSCH is repeated three times in three slots is used as an example. It is assumed that OFDM symbols 2 to 9 in each of slots 1 to 3 are used to carry the PUSCH. In this case, it may be considered that a time domain position of the entire PUSCH includes the OFDM symbols 2 to 9 in the slot 1, the OFDM symbols 2 to 9 in the slot 2, and the OFDM symbols 2 to 9 in the slot 3. In addition, the OFDM symbols 2 to 9 in the slot 1, the OFDM symbols 2 to 9 in the slot 2, and the OFDM symbols 2 to 9 in the slot 3 each are a first time domain range. In other words, it may be considered that there are three first time domain ranges in this scenario.

Case 3: PUSCH repetition type B (PUSCH repetition type B)

In a possible implementation, in the PUSCH repetition type B, the PUSCH is repeated K times, and is repeated at least once in one time unit. For example, there may be two PUSCH repetitions in one time unit. In other words, the PUSCH is repeated K times in Q time units. K is a positive integer, and Q is a positive integer less than or equal to K.

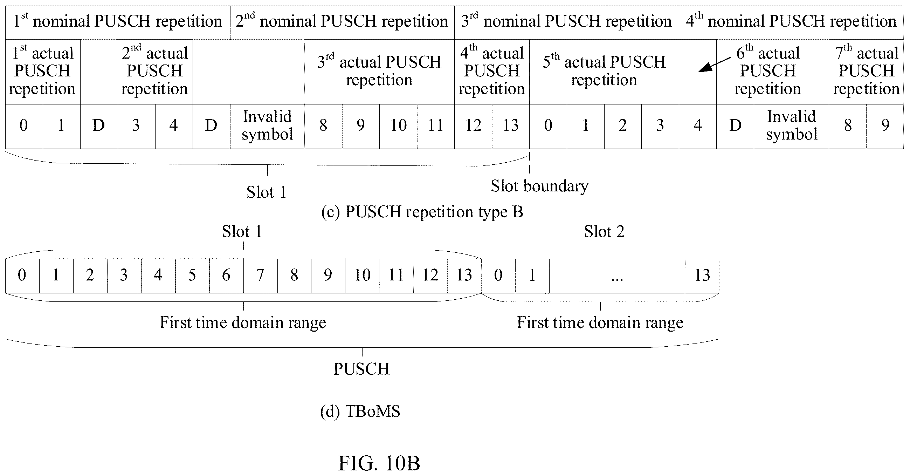

For example, in the PUSCH repetition type B, the network device may first indicate a time domain position of nominal repetition (nominal repetition) and a nominal repetition quantity, for example, indicate a start OFDM symbol, a quantity of consecutive OFDM symbols, and a nominal repetition quantity that are of the time domain position of the nominal repetition and that are in the slot. Starting from the 2nd nominal repetition (which is also referred to as a nominal PUSCH), a start OFDM symbol of next nominal repetition is a next OFDM symbol of an end OFDM symbol of previous nominal repetition. An example in which a start OFDM symbol of a time domain position of the 1st nominal repetition in a slot is a symbol 0, a quantity of consecutive OFDM symbols is equal to 6, and a quantity of nominal repetitions is equal to 4 is used. In this case, a time domain resource of nominal repetition may be shown in (c) in FIG. 10B.

Subsequently, the terminal device may determine a time domain position of actual repetition from the time domain position of the nominal repetition to perform transmission of PUSCH repetition. The time domain position of actual repetition may include a time domain position other than an invalid position in the time domain position of the nominal repetition. For example, the invalid position may include an OFDM symbol configured as a downlink symbol by using a higher layer parameter and an invalid symbol configured by using a higher layer parameter. In addition, a boundary of an invalid time domain position and a boundary of a time unit may be used as boundaries of actual PUSCH repetition.

For example, as shown in (c) in FIG. 10B, an OFDM symbol 2 and an OFDM symbol 5 in a slot 1 and an OFDM symbol 5 in a slot 2 are configured as downlink symbols, and an OFDM symbol 6 and an OFDM symbol 7 in the slot 1 and an OFDM symbol 6 and an OFDM symbol 7 in the slot 2 are configured as invalid symbols. Based on this, there are seven actual PUSCH repetitions in the example shown in (c) in FIG. 10B.

In a possible implementation, a time domain position of actual repetition (actual repetition) in each time unit may be understood as one first time domain range. In other words, that the first time domain range is the time domain position of the PUSCH in one time unit may be understood as: The first time domain range is a time domain position of actual repetition in each time unit in the PUSCH repetition type B.

Optionally, the time domain position of the actual repetition in the time unit may also be understood as a time domain position that is actually used for PUSCH repetition in the time unit, a time domain position of actual PUSCH repetition in the time unit, an actual time domain position of a PUSCH in the time unit, or a time domain position that is actually occupied by a PUSCH in the time unit. The five may be replaced with each other.

For example, as shown in (c) in FIG. 10B, it may be considered that there are seven first time domain ranges in this scenario, and the seven first time domain ranges are time domain positions of seven actual PUSCH repetitions. For example, the 1st first time domain range is a time domain position of the 1st actual PUSCH repetition, that is, an OFDM symbol 0 and an OFDM symbol 1 in the slot 1, and so on. Details are not described.

Case 4: Transport block (transport block, TB) over multiple time units

For example, when the time unit is a slot, Case 4 may be understood as a transport block over multi-slot (transport block over multi-slot, TBoMS).

In a scenario of the TB over multiple time units, multiple time units are used to transmit a large TB. A part of the TB is transmitted in each time unit. In this case, transmission of the entire TB may be considered as one PUSCH. A time domain position of the PUSCH occupies multiple time units, and a time domain position of the PUSCH in each time unit may be understood as one first time domain range. In other words, that the first time domain range is the time domain position of the PUSCH in one time unit may be understood as: The first time domain range is a time domain position of a TB over multiple time units in each time unit.

For example, as shown in (d) in FIG. 10B, an example in which a time unit is a slot, a sub-time unit is an OFDM symbol, and a TB is transmitted in two time units is used. It is assumed that OFDM symbols 0 to 13 in each of slots 1 and 2 are used to carry the TB. In this case, it may be considered that a time domain position of the entire PUSCH includes all OFDM symbols in the slot 1 and the slot 2. In addition, the OFDM symbols 0 to 13 in the slot 1 and the OFDM symbols 0 to 13 in the slot 2 each are a first time domain range. In other words, it may be considered that there are two first time domain ranges in this scenario.

In a possible implementation, frequency hopping in a PUSCH may be understood as frequency hopping in a PUSCH in a time unit. A frequency domain position of a PUSCH in a time unit may be understood as one time of frequency hopping. For example, it may be considered that there are two times of frequency hopping in the example shown in FIG. 7, which are respectively referred to as a first hop and a second hop.

For example, an example in which a time unit is a slot, that is, frequency hopping in the slot is used as an example. A frequency hopping pattern of frequency hopping in the slot may satisfy the following relationship.

$$\text{RB}_{\text{start}} = \begin{cases} \text{RB}_{\text{start}} & i = 0 \\ (\text{RB}_{\text{start}} + \text{RB}_{\text{offset}}) \bmod N_{BWP}^{size} & i = 1 \end{cases}$$

$i = 0$ and $i = 1$ respectively refer to the first hop and the second hop. $\text{RB}_{\text{start}}$ represents a start resource block (resource block, RB) of a PUSCH in an uplink bandwidth. The uplink bandwidth may be, for example, an uplink bandwidth part (bandwidth part, BWP) or an uplink carrier. $\text{RB}_{\text{offset}}$ represents a frequency hopping interval between two times of frequency hopping. The unit of $\text{RB}_{\text{offset}}$ is RB. A quantity of symbols of the first hop is $\lfloor N_{symb}^{PUSCH,s}/2 \rfloor$, and a quantity of symbols of the second hop is $N_{symb}^{PUSCH,s} - \lfloor N_{symb}^{PUSCH,s}/2 \rfloor$. $N_{symb}^{PUSCH,s}$ is a quantity of symbols occupied by the PUSCH in a slot.

In a possible implementation, the time domain position corresponding to each time of frequency hopping in the PUSCH may also be understood as a time domain position corresponding to each time of frequency hopping in the PUSCH in a time unit, and/or a time domain position corresponding to each frequency domain position in the PUSCH in a time unit. For frequency hopping of a PUSCH in a time unit, refer to related descriptions of frequency hopping in a slot. Details are not described herein again.

Optionally, in the foregoing Case 1, if there are two times of frequency hopping in a PUSCH in a time unit, that is, there are two frequency domain positions in the PUSCH in the time unit, a time domain position corresponding to each frequency domain position may be understood as one first time domain range.

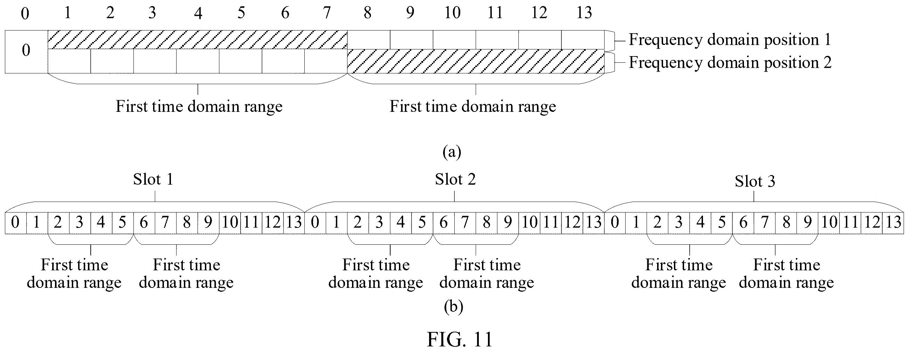

For example, as shown in (a) in FIG. 11, an example in which a time unit is a slot, a sub-time unit is an OFDM symbol, and one time of frequency hopping is performed in the slot is used. It is assumed that a PUSCH #1 is transmitted in a slot 1 and occupies OFDM symbols 1 to 13 in the slot 1, a frequency domain position of a PUSCH in the OFDM symbols 1 to 7 is a frequency domain position 1, and a frequency domain position of a PUSCH in the OFDM symbols 8 to 13 is a frequency domain position 2. In this case, the OFDM symbols 1 to 7 may be understood as one first time domain range, the OFDM symbols 8 to 13 may be understood as another first time domain range.

Optionally, in the foregoing Case 2, if there are two times of frequency hopping in a PUSCH in each time in the PUSCH repetition type A, that is, there are two frequency domain positions of a PUSCH in each time unit, a time domain position corresponding to each frequency domain position in each time unit may be understood as one first time domain range.

For example, as shown in (b) in FIG. 11, an example in which a time unit is a slot, a sub-time unit is an OFDM symbol, and K is equal to 3 is used. It is assumed that OFDM symbols 2 to 9 in each of slots 1 to 3 are used to carry a PUSCH, a frequency domain position of a PUSCH in OFDM symbols 2 to 5 in each slot is a frequency domain position 1, and a frequency domain position of a PUSCH in OFDM symbols 6 to 9 is a frequency domain position 2. In this case, the OFDM symbols 2 to 5 in each slot may be understood as one first time domain range, the OFDM symbols 6 to 9 in each slot may be understood as another first time domain range, that is, it may be considered that there are six first time domain ranges in this scenario.

Optionally, in the foregoing Case 4, if the TB over multiple time units undergoes two times of frequency hopping in each time unit, a time domain position corresponding to each time of frequency hopping in each time unit may be understood as one first time domain range. For details, refer to the example described in (b) in FIG. 11. Details are not described herein again.

When the first resource is in the first time domain range, the first information may indicate N sub-time units in the first time domain range. The N sub-time units are sub-time units in which the first resource is located, and N is a positive integer. For example, N is equal to 1, that is, there is one sub-time unit used for CLI measurement in one first time domain range.

For example, the first information may include indexes of the N sub-time units. The indexes of the N sub-time units may be indexes of sub-time units in a time unit, or may be indexes of sub-time units in the first time domain range. An example in which a time unit is a slot, a sub-time unit is an OFDM symbol, and one slot includes 14 OFDM symbols (where indexes are 0 to 13) is used.

When the first time domain range is a time domain position of a PUSCH in one time unit, and the time domain position of the PUSCH includes OFDM symbols whose indexes are 1 to 13 in a slot, if the indexes of the N sub-time units are indexes of sub-time units in the time unit, the indexes of the N sub-time units may be located in 0 to 13. If the indexes of the N sub-time units are indexes of sub-time units in the first time domain range, the first time domain range includes 13 sub-time units, and the indexes of the N sub-time units may be located in 0 to 12.

When the first time domain range is a time domain position corresponding to each time of frequency hopping in the PUSCH, and it is assumed that the first terminal device sends the PUSCH, a time domain position of a first hop in a slot is OFDM symbols 0 to 6, and a time domain position of a second hop is OFDM symbols 7 to 13. If the indexes of the N sub-time units are indexes of sub-time units in the time unit, indexes of the N sub-time units corresponding to the first hop may be located in 0 to 6, and indexes of the N sub-time units corresponding to the second hop may be located in 7 to 13.

If the indexes of the N sub-time units are indexes of sub-time units in the first time domain range, the indexes of the N sub-time units corresponding to the first hop and the indexes of the N sub-time units corresponding to the second hop may be located in 0 to 6.

When the first time domain range is a time domain position corresponding to each time of frequency hopping in the PUSCH, positions of N sub-time units corresponding to each time of frequency hopping in the first time domain range may be the same. In this case, the first information may indicate only the N sub-time units. For example, an example in which N is equal to 1 is used. The first information may indicate that the $n^{th}$ sub-time unit in each first time domain range is a sub-time unit in which the first resource is located. The first information may include an index n.

Alternatively, positions of N sub-time units corresponding to each time of frequency hopping in the first time domain range may be different. In this case, the first information may separately indicate N sub-time units in each first time domain range. For example, an example in which N is equal to 1, and there are two times of frequency hopping in one time unit is used. The first information may indicate that the $n^{th}$ sub-time unit in the first time domain range corresponding to the first hop is a sub-time unit in which the first resource is located, and indicate that the $m^{th}$ sub-time unit in the first time domain range corresponding to the second hop is a sub-time unit in which the first resource is located. n is different from m, and the first information may include an index n and an index m.

Optionally, the first information may be carried in RRC signaling. In this case, it may be considered that the N sub-time units are semi-statically configured. Alternatively, the first information may be carried in the DCI. In this case, it may be considered that the N sub-time units are dynamically configured. When the first information is carried in the DCI, before the DCI, the first network device may configure a candidate sub-time unit set, and the DCI may indicate N sub-time units from the candidate sub-time unit set.

When the first resource is in the first time domain range, a time domain position of the first resource may satisfy at least one of the multiple conditions below.

(1) The time domain position of the first resource is the 1st sub-time unit not for carrying a DMRS in the first time domain range.

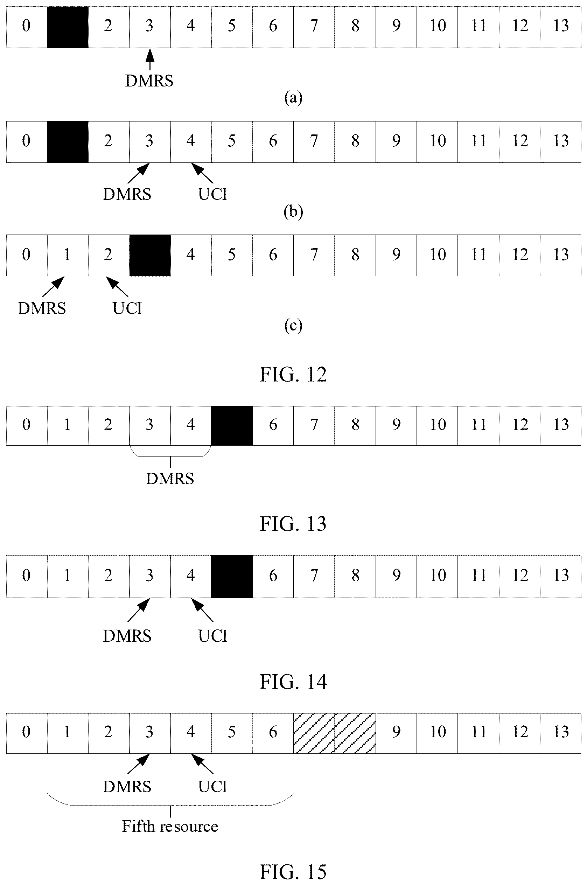

For example, as shown in (a) in FIG. 12, an example in which a time domain position of a PUSCH in a slot includes OFDM symbols 1 to 13, that is, the first time domain range includes the OFDM symbols 1 to 13 is used. Assuming that the OFDM symbol 3 is used to carry a DMRS, the 1st sub-time unit not for carrying a DMRS in the first time domain range is the OFDM symbol 1.

(2) The time domain position of the first resource is the 1st sub-time unit not for carrying UCI in the first time domain range. For details, refer to related descriptions in the condition (1). Details are not described herein again.

(3) The time domain position of the first resource is the 1st sub-time unit not for carrying a DMRS and not for carrying UCI in the first time domain range.

For example, as shown in (b) in FIG. 12, an example in which a time domain position of a PUSCH in a slot includes OFDM symbols 1 to 13, that is, the first time domain range includes the OFDM symbols 1 to 13 is used. Assuming that the OFDM symbol 3 is used to carry a DMRS, and the OFDM symbol 4 is used to carry UCI, the 1st sub-time unit not for carrying a DMRS and not for carrying UCI in the first time domain range is the OFDM symbol 1. Alternatively, as shown in (c) in FIG. 12, assuming that the OFDM symbol 1 is used to carry a DMRS, and the OFDM symbol 2 is used to carry UCI, the 1st sub-time unit not for carrying a DMRS and not for carrying UCI in the first time domain range is the OFDM symbol 3.

(4) The time domain position of the first resource is the 1st sub-time unit not for carrying a DMRS after the 1st sub-time unit for carrying a DMRS in the first time domain range.

For example, as shown in FIG. 13, an example in which a time domain position of a PUSCH in a slot includes OFDM symbols 1 to 13, that is, the first time domain range includes the OFDM symbols 1 to 13 is used. Assuming that the OFDM symbol 3 and the OFDM symbol 4 are used to carry a DMRS, the 1st sub-time unit for carrying a DMRS is the OFDM symbol 3. The 1st sub-time unit that is after the OFDM symbol 3 and not for carrying a DMRS is the OFDM symbol 5. In other words, the 1st sub-time unit not for carrying a DMRS after the 1st sub-time unit for carrying the DMRS in the first time domain range is the OFDM symbol 5.

(5) The time domain position of the first resource is the 1st sub-time unit not for carrying UCI after the 1st sub-time unit for carrying UCI in the first time domain range. For details, refer to related descriptions in the condition (4). Details are not described herein again.

(6) The time domain position of the first resource is the 1st sub-time unit not for carrying a DMRS and UCI after the 1st sub-time unit for carrying a DMRS in the first time domain range.

For example, as shown in FIG. 14, an example in which a time domain position of a PUSCH in a slot includes OFDM symbols 1 to 13, that is, the first time domain range includes the OFDM symbols 1 to 13 is used. Assuming that the OFDM symbol 3 is used to carry a DMRS, and the OFDM symbol 4 is used to carry UCI, the 1st sub-time unit for carrying a DMRS is the OFDM symbol 3, and the 1st sub-time unit not for carrying a DMRS and not for carrying UCI after the OFDM symbol 3 is the OFDM symbol 5.

(7) The time domain position of the first resource is the 1st sub-time unit not for carrying a DMRS and UCI after the 1st sub-time unit for carrying UCI in the first time domain range. For details, refer to related descriptions in the condition (6). Details are not described herein again.

Optionally, when the time domain position of the first resource satisfies the at least one of the foregoing conditions, the foregoing seven conditions may be defined in the protocol, or the first network device may preconfigure the foregoing seven conditions for the first terminal device. In this scenario, the first information may indicate at least one of the foregoing seven conditions. For example, the first information includes an index of the at least one condition. Alternatively, one of the foregoing seven conditions may be defined in the protocol. In this case, the first network device and the first terminal device consider by default that the condition that the time domain position of the first resource satisfies is the condition defined in the protocol, and the first information may indicate a frequency domain position of the first resource, and does not indicate the time domain position of the first resource.

Optionally, the UCI may satisfy at least one of the following.

The UCI is hybrid automatic repeat request-acknowledgment (hybrid automatic repeat request-acknowledgement, HARQ-ACK) information.

The UCI includes HARQ-ACK information and a channel state information-reference signal (channel state information-reference signal, CSI-RS) part 1.

The UCI includes HARQ-ACK information, a CSI-RS part 1, and joint coding of HARQ-ACK and configured grant (configured grant, CG)-UCI (that is, CG-UCI).

The UCI includes HARQ-ACK information, a CSI-RS part 1, a CSI-RS part 2, and joint coding of HARQ-ACK and CG-UCI.

The UCI is joint coding of HARQ-ACK and CG-UCI.

The UCI includes HARQ-ACK information and joint coding of HARQ-ACK and CG-UCI.

Optionally, FIG. 12 to FIG. 14 are described by using an example in which the first time domain range is a time domain position of a PUSCH in one time unit. When the first time domain range is a time domain position corresponding to each time of frequency hopping of the PUSCH, the time domain position of the PUSCH in FIG. 12 to FIG. 14 may be replaced with a time domain position corresponding to one time of frequency hopping for understanding. Details are not described herein.

In a possible implementation, both a first resource (that is, a first-type measurement resource) that is periodically repeated in time domain and a first resource (denoted as a second-type measurement resource) that is located in the first time domain range may exist, or one of the two types of measurement resources may exist in specific time. To be specific, the first network device may configure both the first-type measurement resource and the second-type measurement resource, or configure only the first-type measurement resource or only the second-type measurement resource within a specific time period.

In a possible implementation, a time domain position of the first resource does not overlap a time domain position of the fourth resource. The fourth resource is used for carrying the DMRS, and/or the fourth resource is used for carrying the UCI. In other words, the time domain position of the first resource does not overlap a time domain position of the DMRS and/or a time domain position of the UCI.

Based on this possible implementation, when the time domain position of the first resource does not overlap the time domain position of the DMRS and/or the time domain position of the UCI, CLI measurement does not affect the DMRS and/or the UCI. Therefore, uplink data demodulation and/or UCI transmission are not affected, and transmission performance of uplink data and/or the UCI is improved.

In a possible implementation, if a time domain position of the CLI measurement resource overlaps the fourth resource, processing may be performed according to the following criteria.

(1) The CLI measurement resource is dropped, or it is considered that the CLI measurement resource is an empty set. In this scenario, it may be considered that DMRS and/or UCI transmission is preferentially performed, and CLI measurement is canceled.

(2) A part that is in the CLI measurement resource and that overlaps the fourth resource is dropped.

In a possible implementation, the first network device may indicate the CLI measurement resource to the first terminal device, but the measurement resource may include a part that overlaps the fourth resource. In this case, the first terminal device and the first network device may drop the part that is in the original CLI measurement resource and that overlaps the fourth resource, and perform CLI measurement by using a part that does not overlap the fourth resource.

In other words, that the first information indicates the first resource may include: The first information indicates a fifth resource. The fifth resource is used for measuring CLI, that is, the fifth resource is an original CLI measurement resource. The fifth resource includes a part that overlaps the fourth resource. In this case, the first resource includes a resource that is in the fifth resource and that does not overlap the fourth resource.

In a possible implementation, the first resource may further include M sub-time units after the fifth resource. M is a quantity of sub-time units occupied by the fourth resource. In other words, after the part that is in the original CLI measurement resource and that overlaps the fourth resource is dropped, a resource of a corresponding size may be supplemented as a new CLI measurement resource.

For example, as shown in FIG. 15, an example in which a time unit is a slot, and a sub-time unit is an OFDM symbol is used. It is assumed that an OFDM symbol in which the fifth resource is located includes OFDM symbols 1 to 6, the OFDM symbol 3 is used to carry a DMRS, and the OFDM symbol 4 is used to carry UCI. In this case, the first resource may first include OFDM symbols 1 and 2 and OFDM symbols 5 and 6. Further, after the OFDM symbol 6, two OFDM symbols (for example, OFDM symbols 7 and 8) may also be added as the first resource. To be specific, the first resource includes the OFDM symbols 1 and 2 and the OFDM symbols 5 to 8.

Based on the foregoing criteria, it can be ensured that a resource actually used for measuring CLI does not overlap the time domain position of the DMRS and/or the time domain position of the UCI, thereby avoiding impact of CLI measurement on the DMRS and/or the UCI, reducing impact of the CLI measurement on uplink data demodulation and/or UCI transmission, and improving uplink data and/or UCI transmission performance.

The foregoing describes the time domain position of the first resource, and the following describes the frequency domain position of the first resource. First, for a frequency domain bandwidth of the first resource:

In a first possible implementation, the first information may indicate a start RB of the frequency domain bandwidth and a quantity of RBs included in the frequency domain bandwidth.

In a second possible implementation, a frequency domain bandwidth of the first resource is the same as a frequency domain bandwidth of the second resource. To be specific, the frequency domain bandwidth of the first resource is the same as a frequency domain bandwidth of a PUSCH, that is, a start RB of the bandwidth of the first resource is the same as a start RB of the bandwidth of the PUSCH, and a quantity of RBs included in the bandwidth of the first resource is the same as a quantity of RBs included in the bandwidth of the PUSCH.

In a third possible implementation, the frequency domain bandwidth of the first resource may be an uplink bandwidth part (bandwidth part, BWP), an uplink carrier, or an uplink subband (for example, an uplink subband in an SBFD scenario).

In the foregoing second and third possible implementations, the first information may not indicate the frequency domain bandwidth of the first resource. The first network device and the first terminal device may consider by default that the frequency domain bandwidth of the first resource is the same as the frequency domain bandwidth of the second resource, or consider by default that the frequency domain bandwidth of the first resource is a bandwidth of the uplink BWP, the uplink carrier, or the uplink subband.

Resource elements (resource element, RE) occupied by the first resource in the frequency domain bandwidth may be distributed in combs. For example, a quantity of combs may be 2. Certainly, the quantity of combs may alternatively be another quantity, for example, 4. This is not specifically limited in this application. The first resource has a same position in each RB, that is, the first resource occupies a same RE in each RB.

In a possible implementation, the first resource occupies P REs in one RB, and an index difference between any two adjacent REs in the PREs is $Q/P$. Q is a total quantity of REs included in one RB, and P and Q are positive integers. Further, P is a divisor of Q.

For example, an example in which Q is equal to 12, and P is equal to 6. The first resource occupies six REs in one RB, and an index difference between any two adjacent REs is 2. An example in which Q is equal to 12, and P is equal to 3. The first resource occupies three REs in one RB, and an index difference between any two adjacent REs is 4.

In a first possible implementation, when the REs occupied by the first resource are distributed in two combs (for example, Q is equal to 12, and P is equal to 6), an index of each RE occupied by the first resource may be indicated in the following two manners.

Manner 1: The first information includes a first field. When a value of the first field is a third value, a frequency domain position of the first resource in one RB is an RE whose index is an even number, that is, the first resource occupies the RE whose index is an even number in one RB. When the value of the first field is a fourth value, a frequency domain position of the first resource in one RB is an RE whose index is an odd number, that is, the first resource occupies the RE whose index is an odd number in one RB.

Manner 2: An index of an RE occupied by the first resource in one RB satisfies $2n + k$. $k = 0$ or 1, and $n = 0, 1, ..., Q/2-1$.

In this manner, the first information may indicate a value of $k$, and the index of the RE occupied by the first resource is determined based on the value of $k$. When $k = 0$, the first resource occupies an RE whose index is an even number in one RB; and when $k = 1$, the first resource occupies an RE whose index is an odd number in one RB.

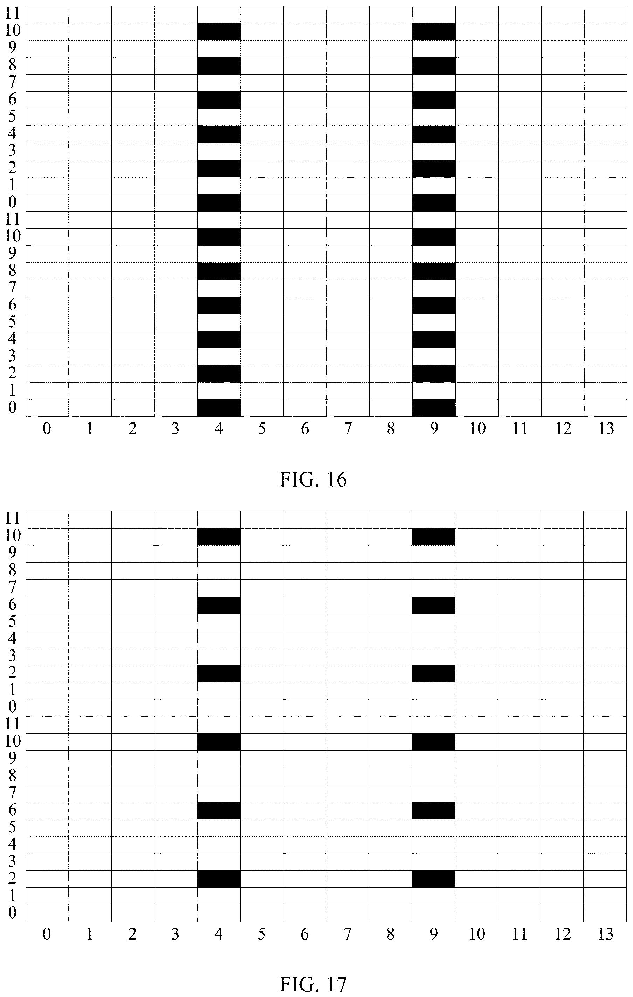

For example, as shown in FIG. 16, an example in which a time unit is a slot, and a sub-time unit is an OFDM symbol is used. A part filled in black in the figure may be understood as a time-frequency position of the first resource. In this case, in FIG. 16, the first resource is located in an OFDM symbol 4 and an OFDM symbol 9 in time domain, and is located in an RE whose index is an even number in an RB in frequency domain.

In a second possible implementation, an index i of the RE occupied by the first resource in the RB satisfies $i = nL + k$.

$L$ is a divisor of Q, Q is a quantity of REs included in an RB, $k$ is one of 0, 1, ..., $L$-1, $n = 0, 1, \ldots, \frac{Q}{L} - 1$, and $L$ is an integer greater than 1.

For example, an example in which $L = 4$ and $k = 2$ is used. Therefore, the first resource occupies REs whose indexes are 2, 6, and 10 in the RB. As shown in FIG. 17, an example in which a time unit is a slot, and a sub-time unit is an OFDM symbol is used. A part filled in black in the figure may be understood as a time-frequency position of the first resource. In this case, in FIG. 17, the first resource is located in an OFDM symbol 4 and an OFDM symbol 9 in time domain, and is located in REs whose indexes are 2, 6, and 10 in an RB in frequency domain.

It may be understood that, for the REs occupied by the first resource in the RB, the foregoing first possible implementation may be understood as a special example of the second implementation. For example, when L in the second possible implementation is equal to 2, the second possible implementation is the same as the first possible implementation.

Optionally, when the time domain position of the first resource overlaps a time domain position of the second resource, and REs occupied by the first resource are distributed in combs, on an OFDM symbol in which the first resource and the second resource overlap, an RE that is not occupied by the first resource may be used to send the first signal.

For example, as shown in FIG. 16 or FIG. 17, it is assumed that the first resource and the second resource overlap on the OFDM symbol 4 and the OFDM symbol 9. In the scenario shown in FIG. 16, REs whose indexes are odd numbers on the OFDM symbol 4 and the OFDM symbol 9 may be used to send the first signal, and in the scenario shown in FIG. 17, REs whose indexes are 0, 1, 3, 4, 5, 7, 8, 9, and 11 on the OFDM symbol 4 and the OFDM symbol 9 may be used to send the first signal.

Optionally, in this scenario, transmit power spectral density of the first signal on an OFDM symbol in which the second resource overlaps the first resource is $Q/(Q-Q/L)$ times transmit power spectral density of the first signal on an OFDM symbol in which the second resource does not overlap the first resource. For example, an example in which Q is equal to 12, and L is equal to 2 is used. Assuming that in the scenario shown in FIG. 16 or FIG. 17, the second resource further includes an OFDM symbol 5, transmit power spectral density of the first signal on the OFDM symbol 4 and the OFDM symbol 9 is twice transmit power spectral density of the first signal on the OFDM symbol 5.

Optionally, the transmit power spectral density of the first signal on an OFDM symbol in which the second resource does not overlap the first resource may be indicated by the first network device. For example, the first network device may indicate the transmit power spectral density in the second information.

It should be noted that, in embodiments of this application, time domain position allocation and frequency domain position allocation of the first resource may be independently implemented. In other words, there is no mutual dependency relationship between the time domain position allocation and the frequency domain position allocation. The time domain position allocation is not affected by the frequency domain position allocation, and the frequency domain position allocation is not affected by the time domain position allocation. That is, the time domain position of the first resource may be allocated according to the foregoing solution, and the frequency domain position of the first resource may be allocated according to another solution; or the frequency domain position of the first resource may be allocated according to the foregoing solution, and the time domain position of the first resource may be allocated according to another solution. Certainly, the time domain position and the frequency domain position of the first resource may alternatively be allocated according to the foregoing solution.

It may be understood that, in the foregoing embodiments, the method and/or the steps implemented by the network device may alternatively be implemented by a component (for example, a processor, a chip, a chip system, a circuit, a logical module, or software) that can be used in the network device, and the method and/or the steps implemented by the terminal device may alternatively be implemented by a component (for example, a processor, a chip, a chip system, a circuit, a logical module, or software) that can be used in the terminal device. The chip system may include a chip, or the chip system may include a chip and another discrete device.

It may be understood that, to implement the foregoing functions, a communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in a form of a software functional module. It should be noted that, in embodiments of this application, module division is an example, and is merely a logical function division. In actual implementation, another division manner may be used.

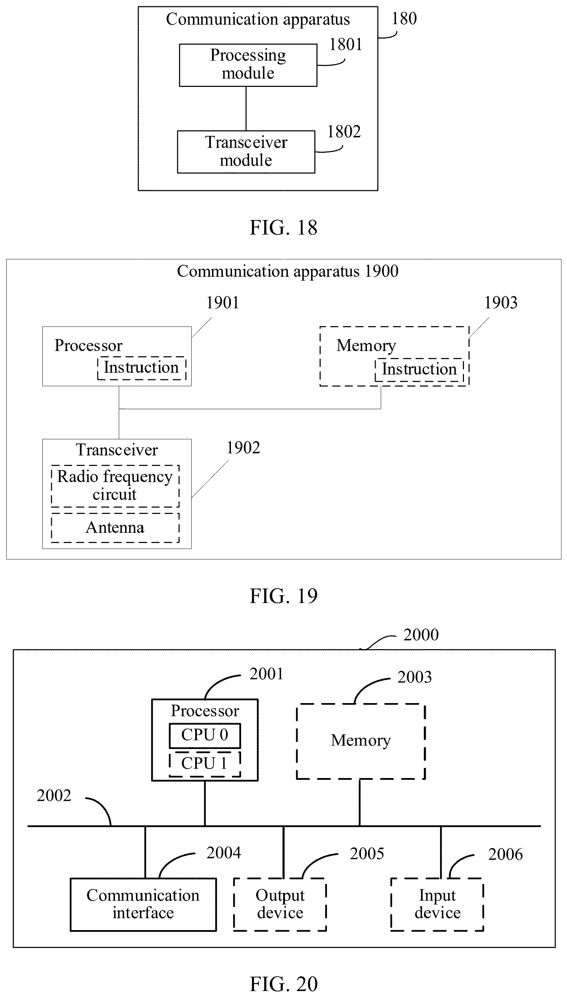

A communication apparatus FIG. 18 is a diagram of a structure of a communication apparatus 180. The communication apparatus 180 includes a processing module 1801 and a transceiver module 1802. The communication apparatus 180 may be configured to implement functions of the foregoing network device or the foregoing terminal device.

In some embodiments, the communication apparatus 180 may further include a storage module (not shown in FIG. 18), configured to store program instructions and data.

In some embodiments, the transceiver module 1802 may also be referred to as a transceiver unit, configured to implement a sending function and/or a receiving function. The transceiver module 1802 may include a transceiver circuit, a transceiver machine, a transceiver, or a communication interface.

In some embodiments, the transceiver module 1802 may include a receiving module and a sending module, respectively configured to perform receiving and sending steps performed by the network device or the terminal device in the foregoing method embodiments and/or configured to support another process of the technology described in this specification. The processing module 1801 may be configured to perform processing (for example, determining and generating) steps performed by the network device or the terminal device in the foregoing method embodiments and/or configured to support another process of the technology described in this specification.

When the communication apparatus 180 is configured to implement the functions of the foregoing network device:

The transceiver module 1802 is configured to send first information to a first terminal device, where the first information indicates a first resource, and the first resource is used for measuring cross-link interference CLI; and the processing module 1801 is configured to measure the CLI on the first resource. The first resource is a time domain periodic resource, and/or the first resource is located in a first time domain range. The first time domain range is a time domain position of a physical uplink shared channel PUSCH in one time unit, or the first time domain range is a time domain position corresponding to each time of frequency hopping in a PUSCH.

Optionally, the transceiver module 1802 is further configured to send second information to the first terminal device, where the second information indicates a second resource, and the second resource is a resource on which the PUSCH is located; and receive a first signal from the first terminal device on a third resource, where the third resource is a resource that is in the second resource and that does not overlap the first resource.

Optionally, the processing module 1801 is further configured to generate the first information and the second information.

When the communication apparatus 180 is configured to implement the functions of the foregoing terminal device:

The transceiver module 1802 is configured to receive first information from a first network device, where the first information indicates a first resource, and the first resource is used for measuring cross-link interference CLI. The transceiver module 1802 is further configured to send a first signal to the first network device on a third resource, where the third resource does not include the first resource. The first resource is a time domain periodic resource, and/or the first resource is located in a first time domain range. The first time domain range is a time domain position of a physical uplink shared channel PUSCH in one time unit, or the first time domain range is a time domain position corresponding to each time of frequency hopping in a PUSCH.

Optionally, the processing module 1801 is configured to determine not to send the first signal on the first resource.

Optionally, the transceiver module 1802 is further configured to receive second information from the first network device, where the second information indicates a second resource, the second resource is a resource on which the PUSCH is located, and the third resource is a resource that is in the second resource and that does not overlap the first resource.

All related content of the steps in the foregoing method embodiments may be cited in function descriptions of corresponding functional modules. Details are not described herein again.

In this application, the communication apparatus 180 may be presented in a form of the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 180 in FIG. 18 is a chip or a chip system, a function/implementation process of the transceiver module 1802 may be implemented through an input/output interface (or a communication interface) of the chip or the chip system, and a function/implementation process of the processing module 1801 may be implemented through a processor (or a processing circuit) of the chip or the chip system.

Because the communication apparatus 180 provided in this embodiment may perform the foregoing methods, for technical effects that can be obtained by the communication apparatus 180, refer to the foregoing method embodiments. Details are not described herein again.

In a possible product form, the terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the terminal device or the network device in embodiments of this application may be implemented by using a general bus architecture. For ease of description, FIG. 19 is a diagram of a structure of a communication apparatus 1900 according to an embodiment of this application. The communication apparatus 1900 includes a processor 1901 and a transceiver 1902. The communication apparatus 1900 may be a network device, or a chip or a chip system in the network device. Alternatively, the communication apparatus 1900 may be a terminal device, or a chip or a module in the terminal device. FIG. 19 shows only main components of the communication apparatus 1900. In addition to the processor 1901 and the transceiver 1902, the communication apparatus may further include a memory 1903 and an input/output apparatus (not shown in the figure).

Optionally, the processor 1901 is mainly configured to: process a communication protocol and communication data, control the entire communication apparatus, execute a software program, and process data of the software program. The memory 1903 is mainly configured to store the software program and the data. The transceiver 1902 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

Optionally, the processor 1901, the transceiver 1902, and the memory 1903 may be connected through a communication bus.

After the communication apparatus is powered on, the processor 1901 may read the software program in the memory 1903, interpret and execute instructions of the software program, and process the data of the software program.

When data needs to be sent in a wireless manner, the processor 1901 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 1901. The processor 1901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the foregoing communication apparatus 180 may be in a form of the communication apparatus 1900 shown in FIG. 19.

In an example, functions/implementation processes of the processing module 1801 in FIG. 18 may be implemented by the processor 1901 in the communication apparatus 1900 shown in FIG. 19 by invoking computer-executable instructions stored in the memory 1903. Functions/implementation processes of the transceiver module 1802 in FIG. 18 may be implemented by the transceiver 1902 in the communication apparatus 1900 shown in FIG. 19.

In still another possible product form, the network device or the terminal device in this application may use a composition structure shown in FIG. 20, or include components shown in FIG. 20. FIG. 20 is a diagram of composition of a communication apparatus 2000 according to this application. The communication apparatus 2000 may be a terminal device, or a chip or a system-on-a-chip in the terminal device, or may be a network device, or a module, a chip, or a system-on-a-chip in the network device.

As shown in FIG. 20, the communication apparatus 2000 includes at least one processor 2001 and at least one communication interface (where FIG. 20 is described merely by using an example in which one communication interface 2004 and one processor 2001 are included). Optionally, the communication apparatus 2000 may further include a communication bus 2002 and a memory 2003.

The processor 2001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2001 may alternatively be another apparatus having a processing function, for example, a circuit, a component, or a software module. This is not limited.

The communication bus 2002 is configured to connect different components in the communication apparatus 2000, so that the different components can communicate with each other. The communication bus 2002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 20, but this does not mean that there is only one bus or only one type of bus.

The communication interface 2004 is configured to communicate with another device or a communication network. For example, the communication interface 2004 may be a module, a circuit, a transceiver, or any apparatus that can implement communication. Optionally, the communication interface 2004 may alternatively be an input/output interface located in the processor 2001, and is configured to implement signal input and signal output of the processor.

The memory 2003 may be an apparatus having a storage function, and is configured to store instructions and/or data. The instructions may be computer programs.

For example, the memory 2003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2003 may exist independently of the processor 2001, or may be integrated with the processor 2001. The memory 2003 may be located inside the communication apparatus 2000, or may be located outside the communication apparatus 2000. This is not limited. The processor 2001 may be configured to execute the instructions stored in the memory 2003, to implement methods provided in the following embodiments of this application.

In an optional implementation, the communication apparatus 2000 may further include an output device 2005 and an input device 2006. The output device 2005 communicates with the processor 2001, and may display information in multiple manners. For example, the output device 2005 may be a liquid crystal display (liquid crystal display, LCD), a light emitting diode (light emitting diode, LED) display device, a cathode ray tube (cathode ray tube, CRT) display device, a projector (projector), or the like. The input device 2006 communicates with the processor 2001, and may receive an input of a user in multiple manners. For example, the input device 2006 may be a mouse, a keyboard, a touchscreen device, or a sensing device.

In some embodiments, in hardware implementation, a person skilled in the art may figure out that the foregoing communication apparatus 180 shown in FIG. 18 may be in a form of the communication apparatus 2000 shown in FIG. 20.

In an example, functions/implementation processes of the processing module 1801 in FIG. 18 may be implemented by the processor 2001 in the communication apparatus 2000 shown in FIG. 20 by invoking computer-executable instructions stored in the memory 2003. Functions/implementation processes of the transceiver module 1802 in FIG. 18 may be implemented by the communication interface 2004 in the communication apparatus 2000 shown in FIG. 20.

It should be noted that the structure shown in FIG. 20 does not constitute a specific limitation on the network device or the terminal device. For example, in some other embodiments of this application, the network device or the terminal device may include more or fewer components than those shown in the figure, a combination of some components, splitting of some components, or different arrangements of the components. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions of any one of foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division into the units is merely logical function division. In actual implementation, another division manner may be used. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may be or may not be physically separate, and may be located in one position, or may be distributed on multiple network units. Components displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not indicate that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, provided that these modifications and variations made to this application fall within the scope of the claims of this application and equivalent techniques thereof, this application is also intended to cover such modifications and variations.

**Claims**

1.  A measurement resource configuration method, wherein the method comprises:

    sending first information to a first terminal device, wherein the first information indicates a first resource, and the first resource is used for measuring cross-link interference CLI; and
    measuring the CLI on the first resource, wherein the first resource is a time domain periodic resource, and/or the first resource is located in a first time domain range; and the first time domain range is a time domain position of a physical uplink shared channel PUSCH in one time unit, or the first time domain range is a time domain position corresponding to each time of frequency hopping in a PUSCH.

2.  The method according to claim 1, wherein the method further comprises:

    sending second information to the first terminal device, wherein the second information indicates a second resource, and the second resource is a resource on which the PUSCH is located; and
    receiving a first signal from the first terminal device on a third resource, wherein the third resource is a resource that is in the second resource and that does not overlap the first resource.

3.  The method according to claim 1 or 2, wherein the first resource is a time domain periodic resource, and the first information indicates at least one of the following:
    a periodicity or an offset of the first resource or a sub-time unit in which the first resource is located, wherein the offset indicates a time unit in which the first resource is located, and the time unit comprises at least one sub-time unit.

4.  The method according to any one of claims 1 to 3, wherein the first information comprises a first bitmap or a second bitmap;

    the first bitmap comprises X bits; the X bits are in one-to-one correspondence with X sub-time units in the time unit in which the first resource is located; in the X bits, a sub-time unit corresponding to a bit whose value is a first value is the sub-time unit in which the first resource is located; and X is a total quantity of sub-time units comprised in the time unit in which the first resource is located; and
    the second bitmap comprises Y bits; the Y bits are in one-to-one correspondence with Y sub-time units in the time unit in which the first resource is located; the Y sub-time units do not comprise a sub-time unit for carrying a non-demodulation reference signal DMRS; in the Y bits, a sub-time unit corresponding to a bit whose value is a first value is the sub-time unit in which the first resource is located; and Y is a positive integer.

5. The method according to any one of claims 1 to 4, wherein the time domain position of the PUSCH in the time unit comprises:
a time domain position of repetition in each time unit in a PUSCH repetition type A, a time domain position of actual repetition in each time unit in a PUSCH repetition type B, or a time domain position of a transport block TB over multiple time units in each time unit.

6. The method according to any one of claims 1 to 5, wherein the first information indicates N sub-time units in the first time domain range, the N sub-time units are sub-time units in which the first resource is located, and N is a positive integer.

7. The method according to any one of claims 1 to 6, wherein a time domain position of the first resource satisfies at least one of the following:

the 1st sub-time unit not for carrying a non-demodulation reference signal DMRS in the first time domain range;
the 1st sub-time unit not for carrying uplink control information UCI in the first time domain range;
the 1st sub-time unit not for carrying a DMRS and not for carrying UCI in the first time domain range;
the 1st sub-time unit not for carrying a DMRS after the 1st sub-time unit for carrying a DMRS in the first time domain range;
the 1st sub-time unit not for carrying UCI after the 1st sub-time unit for carrying UCI in the first time domain range;
the 1st sub-time unit not for carrying a DMRS and UCI after the 1st sub-time unit for carrying a DMRS in the first time domain range; and
the 1st sub-time unit not for carrying a DMRS and UCI after the 1st sub-time unit for carrying UCI in the first time domain range.

8. The method according to any one of claims 1 to 7, wherein the time domain position of the first resource does not overlap a time domain position of a fourth resource; and the fourth resource is used for carrying a DMRS, and/or the fourth resource is used for carrying UCI.

9. The method according to claim 7 or 8, wherein the UCI satisfies at least one of the following:

the UCI is hybrid automatic repeat request-acknowledgment HARQ-ACK information;
the UCI comprises HARQ-ACK information and a channel state information-reference signal CSI-RS part 1;
the UCI comprises HARQ-ACK information, a CSI-RS part 1, and joint coding of HARQ-ACK and configured grant-UCI;
the UCI comprises HARQ-ACK information, a CSI-RS part 1, a CSI-RS part 2, configured grant-UCI, and joint coding of HARQ-ACK and the configured grant-UCI;
the UCI is joint coding of HARQ-ACK and configured grant-UCI; and
the UCI comprises HARQ information and joint coding of HARQ-ACK and configured grant-UCI.

10. The method according to any one of claims 1 to 9, wherein the first resource occupies P resource elements REs in one resource block RB, an index difference between any two adjacent REs in the P REs is $Q/P$, Q is a total quantity of REs comprised in the RB, and P and Q are positive integers.

11. The method according to any one of claims 1 to 10, wherein an index $i$ of a resource element RE occupied by the first resource in a resource block RB satisfies:

$$i = nL + k,$$

wherein

L is a divisor of Q, Q is a quantity of REs comprised in an RB, k is one of 0,1,...,L-1, $n = 0, 1, \ldots, \frac{Q}{L} - 1$, and L is an integer greater than 1.

12. The method according to any one of claims 1 to 11, wherein the method further comprises: sending third information to a second network device, wherein the third information indicates the first resource.

13. A measurement resource configuration method, wherein the method comprises:

receiving first information from a first network device, wherein the first information indicates a first resource, the first resource is used for measuring cross-link interference CLI, the first resource is a time domain periodic resource, and/or the first resource is located in a first time domain range; and the first time domain range is a time domain position of a physical uplink shared channel PUSCH in one time unit, or the first time domain range is a time domain position corresponding to each time of frequency hopping in a PUSCH; and
sending a first signal to the first network device on a third resource, wherein the third resource does not comprise the first resource.

14. The method according to claim 13, wherein the method further comprises:
receiving second information from the first network device, wherein the second information indicates a second resource, the second resource is a resource on which the PUSCH is located, and the third resource is a resource that is in the second resource and that does not overlap the first resource.

15. The method according to claim 13 or 14, wherein the first resource is a time domain periodic resource, and the first information indicates at least one of the following:
a periodicity or an offset of the first resource or a sub-time unit in which the first resource is located, wherein the offset indicates a time unit in which the first resource is located, and the time unit comprises at least one sub-time unit.

16. The method according to any one of claims 13 to 15, wherein the first information comprises a first bitmap or a second bitmap;

the first bitmap comprises X bits; the X bits are in one-to-one correspondence with X sub-time units in the time unit in which the first resource is located; in the X bits, a sub-time unit corresponding to a bit whose value is a first value is the sub-time unit in which the first resource is located; and X is a total quantity of sub-time units comprised in the time unit in which the first resource is located; and
the second bitmap comprises Y bits; the Y bits are in one-to-one correspondence with Y sub-time units in the time unit in which the first resource is located; the Y sub-time units do not comprise a sub-time unit for carrying a non-demodulation reference signal DMRS; in the Y bits, a sub-time unit corresponding to a bit whose value is a first value is the sub-time unit in which the first resource is located; and Y is a positive integer.

17. The method according to any one of claims 13 to 16, wherein the time domain position of the PUSCH in the time unit comprises:
a time domain position of repetition in each time unit in a PUSCH repetition type A, a time domain position of actual repetition in each time unit in a PUSCH repetition type B, or a time domain position of a transport block TB over multiple time units in each time unit.

18. The method according to any one of claims 13 to 17, wherein the first information indicates N sub-time units in the first time domain range, the N sub-time units are sub-time units in which the first resource is located, and N is a positive integer.

19. The method according to any one of claims 13 to 18, wherein a time domain position of the first resource satisfies at least one of the following:

the 1st sub-time unit not for carrying a non-demodulation reference signal DMRS in the first time domain range;
the 1st sub-time unit not for carrying uplink control information UCI in the first time domain range;
the 1st sub-time unit not for carrying a DMRS and not for carrying UCI in the first time domain range;
the 1st sub-time unit not for carrying a DMRS after the 1st sub-time unit for carrying a DMRS in the first time domain range;
the 1st sub-time unit not for carrying UCI after the 1st sub-time unit for carrying UCI in the first time domain range;
the 1st sub-time unit not for carrying a DMRS and UCI after the 1st sub-time unit for carrying a DMRS in the first time domain range; and
the 1st sub-time unit not for carrying a DMRS and UCI after the 1st sub-time unit for carrying UCI in the first time domain range.

20. The method according to any one of claims 13 to 19, wherein the time domain position of the first resource does not overlap a time domain position of a fourth resource; and the fourth resource is used for carrying a DMRS, and/or the fourth resource is used for carrying UCI.

21. The method according to claim 19 or 20, wherein the UCI satisfies at least one of the following:

the UCI is hybrid automatic repeat request-acknowledgment HARQ-ACK information;
the UCI comprises HARQ-ACK information and a channel state information-reference signal CSI-RS part 1;
the UCI comprises HARQ-ACK information, a CSI-RS part 1, and joint coding of HARQ-ACK and configured grant-UCI; and
the UCI comprises HARQ-ACK information, a CSI-RS part 1, a CSI-RS part 2, configured grant-UCI, and joint coding of HARQ-ACK and the configured grant-UCI.

22. The method according to any one of claims 13 to 21, wherein the first resource occupies P resource elements REs in one resource block RB, an index difference between any two adjacent REs in the P REs is $Q/P$, Q is a total quantity of REs comprised in the RB, and P and Q are positive integers.

23. The method according to any one of claims 13 to 22, wherein an index $i$ of a resource element RE occupied by the first resource in a resource block RB satisfies:

$$i = nL + k,$$

wherein

L is a divisor of Q, Q is a quantity of REs comprised in an RB, k is one of 0,1,..., L- 1, $n = 0, 1, \ldots, \frac{Q}{L} - 1$, and L is an integer greater than 1.

24. A communication apparatus, wherein the communication apparatus comprises a module configured to perform the method according to any one of claims 1 to 12 or comprises a module configured to perform the method according to any one of claims 13 to 23.

25. A communication apparatus, wherein the communication apparatus comprises a processor, and the processor is configured to perform the method according to any one of claims 1 to 12, or the processor is configured to perform the method according to any one of claims 13 to 23.

26. A computer-readable storage medium, wherein the computer-readable storage medium comprises instructions, and when the instructions are run, the method according to any one of claims 1 to 12 is implemented, or the method according to any one of claims 13 to 23 is implemented.

27. A computer program product, wherein the computer program product comprises instructions, and when the instructions are run, the method according to any one of claims 1 to 12 is implemented, or the method according to any one of claims 13 to 23 is implemented.

| D | D | D | S | U |
|---|---|---|---|---|

FIG. 1

FIG. 2

| | 1 | 2 | 3 | 4 | 5 | | 1 | 2 | 3 | 4 | 5 |
|---|---|---|---|---|---|---|---|---|---|---|---|
| Subband 1 | D | D | D | S | U | Subband 1 | D | S | U | U | U |

FIG. 3

CSI-IM resource

FIG. 4

CLI measurement resource

FIG. 5

CLI measurement resource

FIG. 6

DL DMRS

PDCCH    PDSCH

Downlink subband: | 0 | 1 | 2 | 3 | 4 | 5 | 6 | 7 | 8 | 9 | 10 | 11 | 12 | 13 |

Frequency domain position 1

Uplink subband

Frequency domain position 2

UL DMRS    UL DMRS

PUSCH

■ CLI measurement resource

FIG. 7

First network device      Second network device

Third terminal device   First terminal device     Second terminal device   Fourth terminal device

FIG. 8

First terminal device        First network device

S901: First information, indicating a first resource, where the first resource is used for measuring CLI, the first resource is a time domain periodic resource or located in a first time domain range, and the first time domain range is a time domain position of a PUSCH in a time unit or a time domain position corresponding to each time of frequency hopping in a PUSCH

S902: Measure the CLI on the first resource

S903: Second information, indicating a second resource, where the second resource is used for carrying the PUSCH

S904: First signal, locating on a third resource, where the third resource does not include the first resource

FIG. 9

(a) PUSCH in one slot

(b) PUSCH repetition type A

FIG. 10A

| 1st nominal PUSCH repetition | | | 2nd nominal PUSCH repetition | | | | | | 3rd nominal PUSCH repetition | | | 4th nominal PUSCH repetition | | | |
|---|---|---|---|---|---|---|---|---|---|---|---|---|---|---|---|
| 1st actual PUSCH repetition | | 2nd actual PUSCH repetition | | | 3rd actual PUSCH repetition | | | | | 4th actual PUSCH repetition | 5th actual PUSCH repetition | | | 6th actual PUSCH repetition | 7th actual PUSCH repetition |
| 0 | 1 | D | 3 | 4 | D | Invalid symbol | 8 | 9 | 10 | 11 | 12 | 13 | 0 | 1 | 2 | 3 | 4 | D | Invalid symbol | 8 | 9 |

Slot 1                          Slot boundary

(c) PUSCH repetition type B

Slot 1                                    Slot 2

| 0 | 1 | 2 | 3 | 4 | 5 | 6 | 7 | 8 | 9 | 10 | 11 | 12 | 13 | 0 | 1 | ... | 13 |

First time domain range                  First time domain range

PUSCH

(d) TBoMS

FIG. 10B

EP 4 734 636 A1

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Frequency domain position 1
Frequency domain position 2

First time domain range          First time domain range

(a)

Slot 1                          Slot 2                          Slot 3

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

First time domain range   First time domain range      First time domain range   First time domain range      First time domain range   First time domain range

(b)

FIG. 11

| 0 | ■ | 2 | 3 | 4 | 5 | 6 | 7 | 8 | 9 | 10 | 11 | 12 | 13 |
|---|---|---|---|---|---|---|---|---|---|----|----|----|----|

↑
DMRS

(a)

| 0 | ■ | 2 | 3 | 4 | 5 | 6 | 7 | 8 | 9 | 10 | 11 | 12 | 13 |
|---|---|---|---|---|---|---|---|---|---|----|----|----|----|

DMRS    UCI

(b)

| 0 | 1 | 2 | ■ | 4 | 5 | 6 | 7 | 8 | 9 | 10 | 11 | 12 | 13 |
|---|---|---|---|---|---|---|---|---|---|----|----|----|----|

DMRS    UCI

(c)

FIG. 12

| 0 | 1 | 2 | 3 | 4 | ■ | 6 | 7 | 8 | 9 | 10 | 11 | 12 | 13 |
|---|---|---|---|---|---|---|---|---|---|----|----|----|----|

DMRS

FIG. 13

| 0 | 1 | 2 | 3 | 4 | ■ | 6 | 7 | 8 | 9 | 10 | 11 | 12 | 13 |
|---|---|---|---|---|---|---|---|---|---|----|----|----|----|

DMRS    UCI

FIG. 14

| 0 | 1 | 2 | 3 | 4 | 5 | 6 | ▨ | ▨ | 9 | 10 | 11 | 12 | 13 |
|---|---|---|---|---|---|---|---|---|---|----|----|----|----|

DMRS    UCI

Fifth resource

FIG. 15

FIG. 16

FIG. 17

Communication apparatus 180

Processing module 1801

Transceiver module 1802

FIG. 18

Communication apparatus 1900

Processor 1901

Instruction

Memory 1903

Instruction

Transceiver 1902

Radio frequency circuit

Antenna

FIG. 19

2000

Processor 2001

CPU 0

CPU 1

Memory 2003

2002

Communication interface 2004

Output device 2005

Input device 2006

FIG. 20

## INTERNATIONAL SEARCH REPORT

| | |
|---|---|
| International application No. | |
| | **PCT/CN2024/108270** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC:H04W 72/-

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度, BAIDU: 交叉链路干扰, 测量, 资源, 时域, 子帧, 帧, 符号, 周期, 跳频, 物理下行共享信道, 物理上行链路共享信道, 上行链路共享信道 VEN; WOTXT; USTXT; EPTXT; IEEE; 3GPP: CLI, Cross link interference, measur+, slot, Subframe, Frame, Symbol, PUSCH, hopping?, hoping?

**C. DOCUMENTS CONSIDERED TO BE RELEVANT**

| Category* | Citation of document, with indication, where appropriate, of the relevant passages | Relevant to claim No. |
|---|---|---|
| X | WO 2022036641 A1 (QUALCOMM INC.) 24 February 2022 (2022-02-24) description, paragraphs 89-92 | 1-26 |
| X | CN 110730464 A (CHINA MOBILE COMMUNICATION CO., LTD. RESEARCH INSTITUTE; CHINA MOBILE COMMUNICATIONS GROUP CO., LTD.) 24 January 2020 (2020-01-24) description, paragraphs 81-96 | 1-26 |
| X | US 2023055304 A1 (SAMSUNG ELECTRONICS CO., LTD.) 23 February 2023 (2023-02-23) description, paragraphs 374-409 | 1-26 |
| A | CN 115474218 A (HUAWEI TECHNOLOGIES CO., LTD.) 13 December 2022 (2022-12-13) entire document | 1-26 |
| A | CN 109219970 A (MEDIATEK INC.) 15 January 2019 (2019-01-15) entire document | 1-26 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 September 2024** | **27 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

| International application No. |
| --- |
| **PCT/CN2024/108270** |

| Patent document cited in search report | | | Publication date (day/month/year) | Patent family member(s) | | | Publication date (day/month/year) |
| --- | --- | --- | --- | --- | --- | --- | --- |
| WO | 2022036641 | A1 | 24 February 2022 | None | | | |
| CN | 110730464 | A | 24 January 2020 | CN | 110730464B | B | 15 August 2023 |
| US | 2023055304 | A1 | 23 February 2023 | EP | 4367812 | A1 | 15 May 2024 |
| | | | | WO | 2023014064 | A1 | 09 February 2023 |
| | | | | CN | 117795874 | A | 29 March 2024 |
| | | | | KR | 20230020339 | A | 10 February 2023 |
| CN | 115474218 | A | 13 December 2022 | WO | 2022257704 | A1 | 15 December 2022 |
| | | | | US | 2024114489 | A1 | 04 April 2024 |
| | | | | IN | 202327083445 | A | 05 April 2024 |
| | | | | EP | 4354940 | A1 | 17 April 2024 |
| CN | 109219970 | A | 15 January 2019 | US | 2018323916 | A1 | 08 November 2018 |
| | | | | US | 10644845 | B2 | 05 May 2020 |
| | | | | EP | 3635993 | A1 | 15 April 2020 |
| | | | | EP | 3635993 | A4 | 22 July 2020 |
| | | | | TW | 201843957 | A | 16 December 2018 |
| | | | | TWI | 687061 | B | 01 March 2020 |
| | | | | WO | 2018202144 | A1 | 08 November 2018 |
| | | | | CN | 109219970 | B | 08 October 2021 |
| | | | | IN | 201927050229 | B | 13 December 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311014175